(19) Europäisches Patentamt
European Patent Office
Office européen des brevets

(11) **EP 4 235 884 B1**

(12) **EUROPEAN PATENT SPECIFICATION**

(45) Date of publication and mention of the grant of the patent:
**20.05.2026 Bulletin 2026/21**

(21) Application number: **21882771.5**

(22) Date of filing: **18.10.2021**

(51) International Patent Classification (IPC):
***C25B 1/04*** *(2021.01)* ***C25B 13/02*** *(2006.01)*
***C25B 13/08*** *(2006.01)* ***H01M 8/1039*** *(2016.01)*
***H01M 8/1058*** *(2016.01)* ***H01M 8/1065*** *(2016.01)*
***H01M 8/18*** *(2006.01)*

(52) Cooperative Patent Classification (CPC):
**C25B 1/04; C25B 13/02; C25B 13/08; H01M 8/1039; H01M 8/1058; H01M 8/1065; H01M 8/188;** Y02E 60/36; Y02E 60/50

(86) International application number:
**PCT/JP2021/038446**

(87) International publication number:
**WO 2022/085630 (28.04.2022 Gazette 2022/17)**

(54) **ELECTROLYTE MEMBRANE, ELECTROLYSIS APPARATUS AND REDOX FLOW BATTERY**

ELEKTROLYTMEMBRAN, ELEKTROLYSEVORRICHTUNG UND REDOX-DURCHFLUSSBATTERIE

MEMBRANE ÉLECTROLYTIQUE, APPAREIL D'ÉLECTROLYSE ET BATTERIE À FLUX REDOX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2020 JP 2020177531**

(43) Date of publication of application:
**30.08.2023 Bulletin 2023/35**

(73) Proprietor: **AGC INC.**
**Chiyoda-ku,**
**Tokyo 1008405 (JP)**

(72) Inventors:
- **HAYABE, Shintaro**
**Tokyo 100-8405 (JP)**
- **SUMIKURA, Kosuke**
**Tokyo 100-8405 (JP)**
- **KANEKO, Takayuki**
**Tokyo 100-8405 (JP)**
- **NISHIO, Takuo**
**Tokyo 100-8405 (JP)**

(74) Representative: **Müller-Boré & Partner Patentanwälte PartG mbB**
**Friedenheimer Brücke 21**
**80639 München (DE)**

(56) References cited:
**EP-A1- 3 527 697**
**EP-A1- 4 209 620**
**WO-A1-03/081700**
**WO-A1-03/081700**
**WO-A1-2013/100083**
**WO-A1-2013/129399**
**WO-A1-2019/088299**
**WO-A1-2019/240278**
**WO-A1-2020/162511**
**JP-A- 2019 065 314**
**US-A1- 2020 259 196**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 235 884 B1

## Description

TECHNICAL FIELD

The present invention relates to an electrolyte membrane, an electrolysis apparatus containing the electrolyte membrane, and a redox flow battery containing the electrolyte membrane.

BACKGROUND ART

An electrolyte membrane can be applied to various applications, and various studies have been conducted. For example, Patent Document 1 discloses an electrolyte membrane containing a fluorinated polymer having ion-exchange groups and a woven fabric, and shows that by specifying the aperture ratio of the woven fabric, the denier of the woven fabric, and the relationship between the thickness of the electrolyte membrane and the ion exchange capacity of the fluorinated polymer, it is possible to reduce the electrolytic voltage when applied to a water electrolysis apparatus.

Further, Patent Document 2 describes a polymer electrolyte membrane, a membrane electrode assembly, and a water electrolyzer; Patent Document 3 describes methods respectively for producing an ion exchange membrane and a dried ion exchange membrane; and Patent Document 4 describes a diaphragm for electrolyzing alkaline water, and a device for electrolyzing alkaline water.

PRIOR ART DOCUMENTS

PATENT DOCUMENTS

| | |
|---|---|
| Patent Document 1: | WO 2020/162511 A1 |
| Patent Document 2: | US 2020/259196 A1 |
| Patent Document 3: | WO 2019/240278 A1 |
| Patent Document 4: | EP 3 527 697 A1 |

DISCLOSURE OF INVENTION

TECHNICAL PROBLEM

At the time of producing an electrolyte membrane containing an electrolyte and a woven fabric, a cleaning treatment such as brushing the surface of the woven fabric may be applied to remove a foreign matter attached to the woven fabric.

The present inventors have found that pinholes may occur in the electrolyte membrane containing a woven fabric that has undergone the cleaning treatment as described above, when it is used in a cell having an anode and a cathode under voltage for a prolonged period of time.

Here, pinholes are defects having holes penetrating therethrough, and if pinholes occur, for example, in applications to electrolysis or batteries, there will be problems such that the transfer amount of material between the anode/cathode or the cathode/anode separated by the electrolyte membrane will increase, or breakages or short-circuits are likely to start from such points.

The present invention has been made in view of the above problem, and is concerned with providing an electrolyte membrane wherein pinholes are less likely to occur even when used in a cell having an anode and a cathode under voltage for a prolonged period of time, as well as an electrolysis apparatus and a redox flow battery containing the electrolyte membrane.

SOLUTION TO PROBLEM

As a result of a careful study of the above problem, the present inventors have found that in an electrolyte membrane comprising a fluorinated polymer having ion-exchange groups and a woven fabric composed of yarns A and yarns B orthogonal thereto, if the aspect ratio $YA_{CA2}/YA_{CA1}$ of yarns A at the intersection of yarns A and yarns B exceeds 1 such that said aspect ratio $YA_{CA2}/YA_{CA1}$ is at least 1.2, and is larger than the aspect ratio $YA_{A2}/YA_{A1}$ of yarns A at the midpoint between yarns B such that the ratio of said aspect ratio $YA_{CA2}/YA_{CA1}$ to said aspect ratio $YA_{A2}/YA_{A1}$ is at least 1.2, and further, the aspect ratio $YA_{CB2}/YA_{CB1}$ of yarns B at the intersection of yarns A and yarns B exceeds 1 such that said

aspect ratio $YA_{CB2}/YA_{CB1}$ is at least 1.2, and is larger than the aspect ratio $YA_{B2}/YA_{B1}$ of yarns B at the midpoint of yarns A such that the ratio of said aspect ratio $YA_{CB2}/YA_{CB1}$ to said aspect ratio $YA_{B2}/YA_{B1}$ is at least 1.2, it is possible to obtain the desired effects, and thus have arrived at the present invention.

That is, the present inventors have found it possible to solve the above problem by providing an electrolyte membrane comprising a fluorinated polymer having ion-exchange groups, and a woven fabric, wherein

said woven fabric consists of yarns A extending in one direction and yarns B extending in a direction orthogonal to said yarns A,
said yarns A and said yarns B are each made of a material that does not elute into an alkaline aqueous solution,
for each of ten different cross sections when cut along the thickness direction of said electrolyte membrane through the center positions of said yarns B in said electrolyte membrane, measuring the maximum length $Y_{CA1}$ in the thickness direction of said electrolyte membrane of said yarns A and the maximum length $Y_{CA2}$ in the direction orthogonal to the thickness direction of said electrolyte membrane of said yarns A, wherein said maximum length $Y_{CA1}$ is measured, and calculating the aspect ratio $YA_{CA2}/YA_{CA1}$ between the average maximum length $YA_{CA1}$, which is the arithmetic mean of the obtained 10 maximum lengths $Y_{CA1}$ and the average maximum length $YA_{CA2}$, which is the arithmetic mean of the obtained 10 maximum lengths $Y_{CA2}$, and
for each of ten different cross-sections when cut along the thickness direction of said electrolyte membrane in a direction parallel to the direction in which said yarns B extend in said electrolyte membrane and at a midpoint between said yarns B, measuring the maximum length $Y_{A1}$ in the thickness direction of said electrolyte membrane of said yarns A and the maximum length $Y_{A2}$ in the direction orthogonal to the thickness direction of said electrolyte membrane of said yarns A, wherein said maximum length $Y_{A1}$ is measured, and calculating the aspect ratio $YA_{A2}/YA_{A1}$ between the average maximum length $YA_{A1}$, which is the arithmetic mean of the obtained 10 maximum lengths $Y_{A1}$ and the average maximum length $YA_{A2}$, which is the arithmetic mean of the obtained 10 maximum lengths $Y_{A2}$, whereby
said aspect ratio $YA_{CA2}/YA_{CA1}$ exceeds 1 and is larger than said aspect ratio $YA_{A2}/YA_{A1}$,
further, for each of ten different cross sections when cut along the thickness direction of said electrolyte membrane through the center positions of said yarns A in said electrolyte membrane, measuring the maximum length $Y_{CB1}$ in the thickness direction of said electrolyte membrane of said yarns B and the maximum length $Y_{CB2}$ in the direction orthogonal to the thickness direction of said electrolyte membrane of said yarns B, wherein said maximum length $Y_{CB1}$ is measured, and calculating the aspect ratio $YA_{CB2}/YA_{CB1}$ between the average maximum length $YA_{CB1}$, which is the arithmetic mean of the obtained 10 maximum lengths $Y_{CB1}$ and the average maximum length $YA_{CB2}$, which is the arithmetic mean of the obtained 10 maximum lengths $Y_{CB2}$, and
for each of ten different cross sections when cut along the thickness direction of said electrolyte membrane in a direction parallel to the direction in which said yarns A extend and at a midpoint between said yarns A, measuring the maximum length $Y_{B1}$ in the thickness direction of said electrolyte membrane of said yarns B and the maximum length $Y_{B2}$ in the direction orthogonal to the thickness direction of said electrolyte membrane of said yarns B, wherein said maximum length $Y_{B1}$ is measured, and calculating the aspect ratio $YA_{B2}/YA_{B1}$ between the average maximum length $YA_{B1}$, which is the arithmetic mean of the obtained 10 maximum lengths $Y_{B1}$ and the average maximum length $YA_{B2}$, which is the arithmetic mean of the obtained 10 maximum lengths $Y_{B2}$, whereby
said aspect ratio $YA_{CB2}/YA_{CB1}$ exceeds 1 and is larger than said aspect ratio $YA_{B2}/YA_{B1}$, and
wherein said aspect ratio $YA_{CA2}/YA_{CA1}$ and said aspect ratio $YA_{CB2}/YA_{CB1}$ are each at least 1.2, and the ratio of said aspect ratio $YA_{CA2}/YA_{CA1}$ to said aspect ratio $YA_{A2}/YA_{A1}$ and the ratio of said aspect ratio $YA_{CB2}/YA_{CB1}$ to said aspect ratio $YA_{B2}/YA_{B1}$ are each at least 1.2.

Particular embodiments of the electrolyte membrane of the present invention as well as an electrolysis apparatus and a redox flow battery containing the electrolyte membrane are set out in the appended claims.

## ADVANTAGEOUS EFFECTS OF INVENTION

The present invention provides an electrolyte membrane wherein pinholes are less likely to occur when used in a cell having an anode and a cathode under voltage for a prolonged period of time, as well as an electrolysis apparatus and a redox flow battery containing the electrolyte membrane.

## BRIEF DESCRIPTION OF DRAWINGS

Fig. 1 is a partial plan view schematically showing an example of the electrolyte membrane of the present invention.
Fig. 2 is a partial cross-sectional view when the electrolyte membrane of Fig. 1 is cut along the CA-CA' line.

Fig. 3 is a partial cross-sectional view when the electrolyte membrane of Fig. 1 is cut along the A-A' line.
Fig. 4 is a partial cross-sectional view when the electrolyte membrane of Fig. 1 is cut along the CB-CB' line.
Fig. 5 is a partial cross-sectional view when the electrolyte membrane of Fig. 1 is cut along the B-B' line.
Fig. 6 is a partial plan view having a part of the electrolyte membrane of Fig. 1 enlarged.
Fig. 7 is a partial cross-sectional view when the electrolyte membrane of Fig. 6 is cut along the A1-A1' line.
Fig. 8 is a partial cross-sectional view when the electrolyte membrane of Fig. 6 is cut along the A2-A2' line.
Fig. 9 is a partial cross-sectional view when the electrolyte membrane of Fig. 6 is cut along the B1-B1' line.
Fig. 10 is a partial cross-sectional view when the electrolyte membrane of Fig. 6 is cut along the B2-B2' line.

DESCRIPTION OF EMBODIMENTS

The definitions of the following terms apply throughout this specification and the appended claims unless otherwise noted.

An "ion-exchange group" is a group capable of exchanging at least some of the ions contained in this group to other ions, and, for example, the following sulfonic acid type functional group and carboxylic acid type functional group may be mentioned.

A "sulfonic acid-type functional group" means a sulfonic acid group ($-SO_3H$) or a sulfonic acid base ($-SO_3M^2$, where $M^2$ is an alkali metal or a quaternary ammonium cation).

A "carboxylic acid-type functional group" means a carboxylic acid group (-COOH) or a carboxylic acid base ($-COOM^1$, where $M^1$ is an alkali metal or a quaternary ammonium cation).

A "precursor membrane" is a membrane containing a polymer having groups which can be converted to ion-exchange groups.

The term "groups which can be converted to ion-exchange groups" means groups which can be converted to ion-exchange groups by treatment such as hydrolysis treatment or acidification treatment.

The term "groups which can be converted to sulfonic acid type functional groups" means groups which can be converted to sulfonic acid type functional groups by treatment such as hydrolysis treatment or acidification treatment.

The term "groups which can be converted to carboxylic acid type functional groups" means groups which can be converted to carboxylic acid type functional groups by known treatment such as hydrolysis treatment or acidification treatment.

A "unit" in a polymer means an atomic group derived from a single monomer molecule, which is formed by polymerization of the monomer. The unit may be an atomic group formed directly by the polymerization reaction, or it may be an atomic group in which a part of the atomic group is converted to another structure by treating the polymer obtained by the polymerization reaction.

A numerical range expressed by using " to " means a range which includes the numerical values listed before and after " to " as the lower and upper limits.

[Electrolyte membrane]

The electrolyte membrane of the present invention is an electrolyte membrane comprising a fluorinated polymer having ion-exchange groups and a woven fabric. Further, said woven fabric is composed of yarns A extending in one direction and yarns B extending in a direction orthogonal to the yarns A. Further, said yarns A and said yarns B are each made of a material which does not elute in an alkaline aqueous solution. Further, the aspect ratio $YA_{CA2}/YA_{CA1}$ calculated by the method as described below exceeds 1 and is larger than the aspect ratio $YA_{A2}/YA_{A1}$ calculated by the method as described below. Specifically, said aspect ratio $YA_{CA2}/YA_{CA1}$ is at least 1.2, and the ratio of said aspect ratio $YA_{CA2}/YA_{CA1}$ to said aspect ratio $YA_{A2}/YA_{A1}$ is at least 1.2. Further, the aspect ratio $YA_{CB2}/YA_{CB1}$ calculated by the method as described below exceeds 1 and is larger than the aspect ratio $YA_{B2}/YA_{B1}$ calculated by the method as described below. Specifically, said aspect ratio $YA_{CB2}/YA_{CB1}$ is at least 1.2, and the ratio of said aspect ratio $YA_{CB2}/YA_{CB1}$ to said aspect ratio $YA_{B2}/YA_{B1}$ is at least 1.2.

In the electrolyte membrane of the present invention, pinholes are less likely to occur at the time when used in a cell having an anode and a cathode under voltage for a prolonged period of time. The details of the reason for this have not been clarified, but are assumed to be due to the following reasons.

At the time of producing an electrolyte membrane containing an electrolyte and a woven fabric, a cleaning treatment such as brushing the surface of the woven fabric may be applied to remove a foreign matter attached to the woven fabric. When the woven fabric is subjected to a cleaning treatment in such a manner, the yarns constituting the woven fabric may become misaligned. This is assumed to cause the electrolyte to swell in areas where the yarn density has decreased, and when the swelling comes into contact with other components in the cell, pinholes (holes in the membrane) are generated.

Here, the aspect ratio $YA_{CA2}/YA_{CA1}$ exceeds 1 in the woven fabric contained in the electrolyte membrane of the

present invention. As will be explained with reference to Figs. as described below, the aspect ratio $YA_{CA2}/YA_{CA1}$ represents the aspect ratio of the cross sections of yarns A at the intersection of yarns A and yarns B, and the larger the aspect ratio $YA_{CA2}/YA_{CA1}$, the more crushed yarns A are in the thickness direction at the intersection.

Further, the aspect ratio $YA_{A2}/YA_{A1}$ represents the aspect ratio of the cross sections of yarns A at the midpoint between yarns B. In the woven fabric contained in the electrolyte membrane of the present invention, the aspect ratio $YA_{CA2}/YA_{CA1}$ is larger than the aspect ratio $YA_{A2}/YA_{A1}$. It is considered that yarns A are thereby made to be less likely to move by a cleaning treatment, whereby the occurrence of misalignment of yarns is prevented. It is assumed that as a result, in a case where the electrolyte membrane of the present invention is used in a cell having an anode and a cathode under voltage for a prolonged period of time, the swelling of the electrolyte membrane is less likely to occur, and the formation of pinholes is suppressed.

Fig. 1 is a partial plan view showing schematically an example of the electrolyte membrane of the present invention. The electrolyte membrane 10 has an electrolyte 12 and a woven fabric 14 disposed in the electrolyte 12.

The woven fabric 14 comprises yarn 14A1, yarn 14A2, yarn 14A3 and yarn14A4, and yarn 14B1, yarn 14B2, yarn 14B3 and yarn14B4. Yarn 14A1, yarn 14A2, yarn 14A3 and yarn 14A4 correspond to yarns A constituting the woven fabric 14, and yarn 14B1, yarn 14B2, yarn 14B3 and yarn 14B4 correspond to yarns B constituting the woven fabric 14.

Fig. 2 is a partial cross-sectional view showing an example when cut, in Fig. 1, along the thickness direction of the electrolyte membrane through the center positions of yarns B in the electrolyte membrane, and specifically, is a cross-section exposed at the time when the electrolyte membrane 10 is cut along the CA-CA' line in Fig. 1. In the cross-section of the electrolyte membrane 10 in Fig. 2, the electrolyte 12 containing the fluorinated polymer (I) and yarn 14A1, yarn 14A2, yarn 14A3, yarn 14A4 and yarn 14B2, disposed in the electrolyte 12, are exposed.

The calculation method for the aspect ratio $YA_{CA2}/YA_{CA1}$ in the present invention will be described.

For each of 10 different cross sections when cut along the thickness direction of the electrolyte membrane through the center positions of yarns B in the electrolyte membrane, the maximum length $Y_{CA1}$ in the thickness direction of the electrolyte membrane of yarns A and the maximum length $Y_{CA2}$ in the direction orthogonal to the thickness direction of the electrolyte membrane of yarns A, in which the maximum length $Y_{CA1}$ is measured, are measured.

Specifically, in the example in Fig. 2, the electrolyte membrane 10 is cut along the CA-CA' line passing through the center position of the yarn 14B2 in the electrolyte membrane 10. This exposes a cross-section of the electrolyte membrane 10 as shown in Fig. 2. Similarly, the electrolyte membrane 10 is cut along the center position of yarn B other than 14B2 (e.g. yarn 14B3) to expose a cross-section of the electrolyte membrane 10. In this manner, after obtaining 10 different cross sections, any optional yarn A (yarn 14A1 in Fig. 2) in each cross section is selected, and the maximum length $Y_{CA2}$ and the maximum length $Y_{CA1}$ in the selected yarn A are measured.

The ratio of the average maximum length $YA_{CA2}$, which is the arithmetic mean of the obtained 10 maximum lengths $Y_{CA2}$, to the average maximum length $YA_{CA1}$, which is the arithmetic mean of the obtained 10 maximum lengths $Y_{CA1}$, is adopted as the aspect ratio $YA_{CA2}/YA_{CA1}$.

Fig. 3 is a partial cross-sectional view showing an example when cut, in Fig. 1, along the thickness direction of the electrolyte membrane in a direction parallel to the direction in which the yarns B in the electrolyte membrane extend and at the midpoint between the yarns B, and specifically, is the cross-section which is exposed when the electrolyte membrane 10 is cut along the A-A' line in Fig. 1. In the cross-section of the electrolyte membrane 10 in Fig. 3, the electrolyte 12 containing the fluorinated polymer (I) and yarn 14A1, yarn 14A2, yarn 14A3 and yarn 14A4, disposed in the electrolyte 12, are exposed.

The calculation method for the aspect ratio $YA_{A2}/YA_{A1}$ in the present invention will be described.

For each of 10 different cross sections when cut along the thickness direction of the electrolyte membrane in a direction parallel to the direction in which yarns B extend in the electrolyte membrane and at the midpoint between yarns B, the maximum length $Y_{A1}$ in the thickness direction of the electrolyte membrane of yarns A and the maximum length $Y_{A2}$ in a direction perpendicular to the thickness direction of the electrolyte membrane of yarns A, in which the maximum length $Y_{A1}$ is measured, are measured.

Specifically, in the example in Fig. 3, the electrolyte membrane 10 is cut at the A-A' line located in the midpoint between yarn 14B2 and yarn 14B3 in the electrolyte membrane 10. This exposes a cross-section of the electrolyte membrane 10 as shown in Fig. 3. Similarly, the electrolyte membrane 10 is cut at a position other than the midpoint between yarn 14B2 and yarn 14B3 (e.g. midpoint between yarn 14B3 and yarn 14B4) to expose a cross-section of the electrolyte membrane 10. In this manner, after obtaining 10 different cross sections, any optional yarn A (yarn 14A1 in Fig. 2) in each cross section is selected, and the maximum length $Y_{A2}$ and the maximum length $Y_{A1}$ in the selected yarn A are measured.

The ratio of the average maximum length $YA_{A2}$, which is the arithmetic mean of the obtained 10 maximum lengths $Y_{A2}$, to the average maximum length $YA_{A1}$, which is the arithmetic mean of the obtained 10 maximum lengths $Y_{A1}$, is adopted as the aspect ratio $YA_{A2}/YA_{A1}$.

The lower limit of the aspect ratio $YA_{CA2}/YA_{CA1}$ exceeds 1, and, from the viewpoint that the effects of the present invention will be more excellent, is at least 1.2, preferably at least 1.5, further preferably at least 2.0, particularly preferably at least 2.5, and most preferably at least 4.0.

The upper limit of the aspect ratio $YA_{CA2}/YA_{CA1}$ is preferably at most 7.0, more preferably at most 6.0, and particularly preferably at most 5.0, from such a viewpoint that the aperture ratio of the woven fabric may be made to be small, to prevent the voltage from increasing.

The aspect ratio $YA_{A2}/YA_{A1}$ is preferably from 0.5 to 3.5, more preferably from 0.8 to 3.5, and particularly preferably from 0.8 to 2.0, from such a viewpoint that the effects of the present invention will be more excellent.

The ratio of the aspect ratio $YA_{CA2}/YA_{CA1}$ to the aspect ratio $YA_{A2}/YA_{A1}$ $((YA_{CA2}/YA_{CA1})/(YA_{A2}/YA_{A1}))$ exceeds 1 (that is, the aspect ratio $YA_{CA2}/YA_{CA1}$ is larger than the aspect ratio $YA_{A2}/YA_{A1}$), and from such a viewpoint that the effects of the present invention will be more excellent, is at least 1.2, preferably at least 1.4, further preferably at least 1.6, particularly preferably at least 2.2, and most preferably at least 2.4.

The upper limit of the above ratio $((YA_{CA2}/YA_{CA1})/(YA_{A2}/YA_{A1}))$ is preferably at most 4.0, more preferably at most 3.5, and particularly preferably at most 3.0, from such a viewpoint that it is thereby possible to prevent the occurrence of current shielding due to too large flatness in the intersection area.

The average maximum length $YA_{CA2}$ is preferably from 20 to 160 μm, more preferably from 20 to 90 μm, and particularly preferably from 20 to 80 μm, from such a viewpoint that the effects of the present invention will be more excellent.

The average maximum length $YA_{CA1}$ is preferably from 10 to 80 μm, more preferably from 10 to 60 μm, and particularly preferably from 10 to 40 μm, from such a viewpoint that the effects of the present invention will be more excellent.

The average maximum length $YA_{A2}$ is preferably from 20 to 140 μm, more preferably from 20 to 80 μm, and particularly preferably from 20 to 60 μm, from such a viewpoint that the effects of the present invention will be more excellent.

The average maximum length $YA_{A1}$ is preferably from 20 to 80 μm, more preferably from 20 to 60 μm, and particularly preferably from 20 to 40 μm, from such a viewpoint that the effects of the present invention will be more excellent.

Fig. 4 is a partial cross-sectional view showing an example when cut, in Fig. 1, along the thickness direction of the electrolyte membrane through the center position of yarn A in the electrolyte membrane, and specifically, the cross-section which is exposed when the electrolyte membrane 10 is cut along the CB-CB' line in Fig. 1. In the cross-section of the electrolyte membrane 10 in Fig. 4, the electrolyte 12 containing the fluorinated polymer (I) and yarn 14B1, yarn 14B2, yarn 14B3, yarn 14B4 and yarn 14A1 disposed in the electrolyte 12, are exposed.

The calculation method for the aspect ratio $YA_{CB2}/YA_{CB1}$ in the present invention will be described.

For each of 10 different cross sections when cut along the thickness direction of the electrolyte membrane through the center positions of yarns B in the electrolyte membrane, the maximum length $Y_{CB1}$ in the thickness direction of the electrolyte membrane of yarns B and the maximum length $Y_{CB2}$ in the direction orthogonal to the thickness direction of the electrolyte membrane of yarns B, where the maximum length $Y_{CB1}$ is measured, are measured.

Specifically, in the example in Fig. 4, the electrolyte membrane 10 is cut along the CB-CB' line passing through the center position of the yarn 14A1 in the electrolyte membrane. This exposes a cross-section of the electrolyte membrane 10 as shown in Fig. 4. Similarly, the electrolyte membrane 10 is cut along the center position of a yarn A other than 14A1 (e.g. yarn 14A2) to expose a cross-section of the electrolyte membrane 10. In this manner, after obtaining 10 different cross sections, any optional yarn B (yarn 14B1 in Fig. 4) is selected, and the maximum length $Y_{CB2}$ and the maximum length $Y_{CB1}$ in the selected yarn B, are measured.

The ratio of the average maximum length $YA_{CB2}$, which is the arithmetic mean of the obtained 10 maximum lengths $Y_{CB2}$, to the average maximum length $YA_{CB1}$, which is the arithmetic mean of the obtained 10 maximum lengths $Y_{CB1}$, is adopted as the aspect ratio $YA_{CB2}/YA_{CB1.}$

Fig. 5 is a partial cross-sectional view showing an example when cut, in Fig. 1, along the thickness direction of the electrolyte membrane in a direction parallel to the direction in which the yarns A in the electrolyte membrane extend and at the midpoint between the yarns A, and specifically, the cross section exposed when the electrolyte membrane 10 is cut along the B-B' line in Fig. 1. In the cross-section of the electrolyte membrane 10 in Fig. 5, the electrolyte 12 containing the fluorinated polymer (I) and yarn 14B1, yarn 14B2, yarn 14B3 and yarn 14B4 disposed in the electrolyte 12, are exposed.

The calculation method for the aspect ratio $YA_{B2}/YA_{B1}$ in the present invention will be described.

For each of 10 different cross sections when cut along the thickness direction of the electrolyte membrane in a direction parallel to the direction in which yarns A extend in the electrolyte membrane and a midpoint between yarns A, the maximum length $Y_{B1}$ in the thickness direction of the electrolyte membrane of yarns B and the maximum length $Y_{B2}$ in the direction orthogonal to the thickness direction of the electrolyte membrane of yarns B, in which the maximum length $Y_{B1}$ is measured, are measured.

Specifically, in the example in Fig. 5, the electrolyte membrane 10 is cut at the B-B' line located at the midpoint between yarn 14A1 and yarn 14A2 in the electrolyte membrane 10. This exposes a cross-section of the electrolyte membrane 10 as shown in Fig. 5. Similarly, the electrolyte membrane 10 is cut at a position other than the midpoint between yarn 14A1 and yarn 14A2 (e.g. midpoint between yarn 14A2 and yarn 14A3) to expose a cross-section of the electrolyte

membrane 10. In this manner, after obtaining 10 different cross sections, any optional yarn B (yarn 14B1 in Fig. 5) in each cross section is selected, and the maximum length $Y_{B2}$ and the maximum length $Y_{B1}$ in the selected yarn B are measured.

The ratio of the average maximum length $YA_{B2}$, which is the arithmetic mean of the obtained 10 maximum lengths $Y_{B2}$, to the average maximum length $YA_{B1}$, which is the arithmetic mean of the obtained 10 maximum lengths $Y_{B1}$, is adopted as the aspect ratio $YA_{B2}/YA_{B1}$.

The lower limit of the aspect ratio $YA_{CB2}/YA_{CB1}$ exceeds 1, and from such a viewpoint that the effects of the present invention will be more excellent, is at least 1.2, preferably at least 1.5, further preferably at least 2.0, particularly preferably at least 2.5, and most preferably at least 4.0.

The upper limit of the aspect ratio $YA_{CB2}/YA_{CB1}$ is preferably at most 7.0, more preferably at most 6.0, and particularly preferably at most 5.0, from such a viewpoint that it will be possible to prevent the voltage from increasing as the aperture ratio of the woven fabric will be small.

The aspect ratio $YA_{B2}/YA_{B1}$ is preferably from 0.5 to 3.5, more preferably from 0.8 to 3.5, and particularly preferably from 0.8 to 2.0, from such a viewpoint that the effects of the present invention will be more excellent.

The ratio of the aspect ratio $YA_{CB2}/YA_{CB1}$ to the aspect ratio $YA_{B2}/YA_{B1}$ $((YA_{CB2}/YA_{CB1})/(YA_{B2}/YA_{B1}))$ exceeds 1 (that is, the aspect ratio $YA_{CB2}/YA_{CB1}$ is larger than the aspect ratio $YA_{B2}/YA_{B1}$), and from such a viewpoint that the effects of the present invention will be more excellent, is at least 1.2, preferably at least 1.4, further preferably at least 1.6, particularly preferably at least 2.2, and most preferably at least 2.4.

The upper limit of the above ratio $((YA_{CB2}/YA_{CB1})/(YA_{B2}/YA_{B1}))$ is preferably at most 4.0, more preferably at most 3.5, and particularly preferably at most 3.0, from such a view point that it will be possible to prevent the occurrence of current shielding due to too large flatness in the intersection area.

The average maximum length $YA_{CB2}$ is preferably from 20 to 160 μm, more preferably from 20 to 90 μm, and particularly preferably from 20 to 80 μm, from such a viewpoint that the effects of the present invention will be more excellent.

The average maximum length $YA_{CB1}$ is preferably from 10 to 80 μm, more preferably from 10 to 60 μm, and particularly preferably from 10 to 40 μm, from such a viewpoint that the effects of the present invention will be more excellent.

The average maximum length $Y_{B2}$ is preferably from 20 to 140 μm, more preferably from 20 to 80 μm, and particularly preferably from 20 to 60 μm, from such a viewpoint that the effects of the present invention will be more excellent.

The average maximum length $Y_{B1}$ is preferably from 20 to 80 μm, more preferably from 20 to 60 μm, and particularly preferably from 20 to 40 μm, from such a viewpoint that the effects of the present invention will be more excellent.

Fig. 6 is a partial plan view having one part of the electrolyte membrane of Fig. 1 enlarged. The symbols for the respective components in Fig. 6 are the same as the symbols for the respective components in Fig. 1.

Fig. 7 is a partial cross-sectional view showing an example when cut, in Fig. 6, along the thickness direction of the electrolyte membrane, in a direction parallel to the direction in which the yarns B in the electrolyte membrane extend, and at a point where the distance is 1/4 of the distance between the edge X1 and the edge Y1 of the two adjacent yarns B, from the edge X1 of one yarn B that is closer to the other yarn B toward the edge Y1 of the yarn that is closer to said one yarn B. Specifically, Fig. 7 is the cross-section exposed when the electrolyte membrane 10 is cut at the A1-A1' line in Fig. 6. In the cross-section of the electrolyte membrane 10 in Fig. 7, the electrolyte 12 containing the fluorinated polymer (I) and yarn 14A1 and yarn 14A2 disposed in the electrolyte 12 are exposed.

Next, the calculation method for the aspect ratio $YA_{A12}/YA_{A11}$ will be described.

For each of the 10 different cross sections when cut along the thickness direction of the electrolyte membrane, in a direction parallel to the direction in which the yarns B in the electrolyte membrane extend, and at a point where the distance is 1/4 of the distance between the edge X1 and the edge Y1 of the two adjacent yarns B, from the edge X1 of one yarn B that is closer to the other yarn B toward the edge Y1 of the yarn that is closer to said one yarn B, the maximum length $Y_{A11}$ in the thickness direction of the electrolyte membrane of yarns A and the maximum length $Y_{A12}$ in the direction orthogonal to the thickness direction of the electrolyte membrane of yarns A wherein the maximum length $Y_{A11}$ is measured, are measured.

Specifically, in the example in Fig. 7, the electrolyte membrane 10 is cut at the A1-A1' line located at a point where the distance is 1/4 of the distance between the edge X1 and the edge Y1, from edge X1 toward edge Y1. This exposes a cross-section of the electrolyte membrane 10 as shown in Fig. 7. In the same manner, the electrolyte membrane 10 is cut at a position other than between yarn 14B1 and yarn 14B2 to expose a cross-section of the electrolyte membrane 10. In this manner, after obtaining 10 different cross sections, any optional yarn A (yarn 14A1 in Fig. 7) in each cross-section is selected, and the maximum length $Y_{A12}$ and the maximum length $Y_{A11}$ in the selected yarn A are measured.

The ratio of the average maximum length $YA_{A12}$, which is the arithmetic mean of the obtained 10 maximum lengths $Y_{A12}$, to the average maximum length $YA_{A11}$, which is the arithmetic mean of the obtained 10 maximum lengths $Y_{A11}$, is adopted as the aspect ratio $YA_{A12}/YA_{A11}$.

The aspect ratio $YA_{A12}/YA_{A11}$ is preferably from 0.5 to 3.5, and particularly preferably from 0.8 to 2.0, from such a viewpoint that the effects of the present invention will be more excellent.

The ratio of the aspect ratio $YA_{CA2}/YA_{CA1}$ to the aspect ratio $YA_{A12}/YA_{A11}$ $((YA_{CA2}/YA_{CA1})/(YA_{A12}/YA_{A11}))$ preferably exceeds 1, more preferably at least 1.2, further preferably at least 1.4, still further preferably at least 1.6, particularly preferably at least 2.2, and most preferably at least 2.4, from such a viewpoint that the effects of the present invention will be more excellent.

The upper limit of the above ratio $((YA_{CA2}/YA_{CA1})/(YA_{A12}/YA_{A11}))$ is preferably at most 4.0, more preferably at most 3.5, and particularly preferably at most 3.0, from such a viewpoint that it is possible to prevent the occurrence of current shielding due to too large flatness in the intersection area.

The average maximum length $YA_{A12}$ is preferably from 20 to 140 μm, more preferably from 20 to 80 μm, and particularly preferably from 20 to 60 μm, from such a viewpoint that the effects of the present invention will be more excellent.

The average maximum length $YA_{A11}$ is preferably from 20 to 80 μm, more preferably from 20 to 60 μm, and particularly preferably from 20 to 40 μm, from such a viewpoint that the effects of the present invention will be more excellent.

Fig. 8 is a partial cross-sectional view showing an example when cut along the thickness direction of the electrolyte membrane in Fig. 6, in a direction parallel to the direction in which the yarns B in the electrolyte membrane extend, and at a point where the distance is 3/4 of the distance between edge X1 and edge Y1 of the two adjacent yarns B, from the edge X1 of one yarn B closer to the other yarn B toward the edge Y1 of the other yarn B closer to the one yarn B. Specifically, Fig. 8 is the cross-section exposed when the electrolyte membrane 10 is cut at the A2-A2' line in Fig. 6. In the cross-section of the electrolyte membrane 10 in Fig. 8, the electrolyte 12 containing the fluorinated polymer (I) and yarn 14A1 and yarn 14A2 disposed in the electrolyte 12, are exposed.

Next, the calculation method for the aspect ratio $YA_{A22}/YA_{A21}$ will be described.

For each of the 10 different cross sections when cut along the thickness direction of the electrolyte membrane, in a direction parallel to the direction in which the yarns B in the electrolyte membrane extend, and at a point where the distance is 3/4 of the distance between the edge X1 and the edge Y1 of the two adjacent yarns B, from the edge X1 of one yarn B closer to the other yarn B toward the edge Y1 of the other yarn B closer to said one yarn B, the maximum length $Y_{A21}$ in the thickness direction of the electrolyte membrane of yarns A and the maximum length $Y_{A22}$ in the direction orthogonal to the thickness direction of the electrolyte membrane of yarns A wherein the maximum length $Y_{A21}$ is measured, are measured.

Specifically, in the example in Fig. 8, the electrolyte membrane 10 is cut at the A2-A2' line located at the point where the distance is 3/4 of the distance between edge X1 and edge Y1 from edge X1 toward edge Y1. This exposes a cross-section of the electrolyte membrane 10 as shown in Fig. 8. In the same manner, the electrolyte membrane 10 is cut at a position other than between yarn 14B1 and yarn 14B2, to expose a cross-section of the electrolyte membrane 10. In this manner, after obtaining 10 different cross sections, any optional yarn A (yarn 14A1 in Fig. 8) in each section is selected, and the maximum length $Y_{A22}$ and the maximum length $Y_{A21}$ in the selected yarn A are measured.

The ratio of the average maximum length $YA_{A22}$, which is the arithmetic mean of the obtained 10 maximum lengths $Y_{A22}$, to the average maximum length $YA_{A21}$, which is the arithmetic mean of the obtained 10 maximum lengths $Y_{A21}$, is adopted as the aspect ratio $YA_{A22}/YA_{A21}$ .

The aspect ratio $YA_{A22}/YA_{A21}$ is preferably from 0.5 to 3.5, and particularly preferably from 0.8 to 2.0, from such a viewpoint that the effects of the present invention will be more excellent.

The ratio of the aspect ratio $YA_{CA2}/YA_{CA1}$ to the aspect ratio $YA_{A22}/YA_{A21}$ $((YA_{CA2}/YA_{CA1})/(YA_{A22}/YA_{A21}))$ preferably exceeds 1, and is more preferably at least 1.2, further preferably at least 1.4, still further preferably at least 1.6, particularly preferably at least 2.2, and most preferably at least 2.4, from such a viewpoint that the effects of the present invention will be more excellent.

The upper limit of the above ratio $((YA_{CA2}/YA_{CA1})/(YA_{A22}/YA_{A21}))$ is at most 4.0, more preferably at most 3.5, and particularly preferably at most 3.0, from such a viewpoint that it will be possible to prevent the occurrence of current shielding due to too large flatness in the intersection area.

The average maximum length $YA_{A22}$ is preferably from 20 to 140 μm, more preferably from 20 to 80 μm, and particularly preferably from 20 to 60 μm, from such a viewpoint that the effects of the present invention will be more excellent.

The average maximum length $YA_{A21}$ is preferably from 20 to 80 μm, more preferably from 20 to 60 μm, and particularly preferably from 20 to 40 μm, from such a viewpoint that the effects of the present invention will be more excellent.

Fig. 9 is a partial cross-sectional view showing an example when cut along the thickness direction of the electrolyte membrane in Fig. 6, in a direction parallel to the direction in which yarns A in the electrolyte membrane extend, and at a point where the distance is 1/4 of the distance between edge X2 and edge Y2 of the adjacent two yarns A, from edge X2 of the one yarn A closer to the other yarn A toward edge Y2 of the other yarn A closer to said one yarn A.

Specifically, Fig. 9 is the cross-section exposed when the electrolyte membrane 10 is cut at the B1-B1' line in Fig. 6. In the cross-section of the electrolyte membrane 10 in Fig. 9, the electrolyte 12 containing the fluorinated polymer (I) and yarn 14B1 and yarn 14B2 disposed in the electrolyte 12, are exposed.

Next, the calculation method for the aspect ratio $YA_{B12}/YA_{B11}$ will be described.

For each of the 10 different cross sections when cut along the thickness direction of the electrolyte membrane, in a direction parallel to the direction in which yarns A in the electrolyte membrane extend and at a point where the distance is 1/4 of the distance between edge X2 and edge Y2 of two adjacent yarns A, from edge X2 of the one yarn A closer to the other yarn A toward edge Y2 of the other yarn A closer to the one yarn A, the maximum length $Y_{B11}$ in the thickness direction of the electrolyte membrane of yarns B and the maximum length $Y_{B12}$ in the direction orthogonal to the thickness direction of the electrolyte membrane of yarns B in which the maximum length $Y_{B11}$ is measured, are measured.

Specifically, in the example in Fig. 9, the electrolyte membrane 10 is cut at the B1-B1' line located at a point where the distance is 1/4 of the distance between edge X2 and edge Y2, from edge X2 to edge Y2. This exposes a cross-section of the electrolyte membrane 10 as shown in Fig. 9. In the same manner, the electrolyte membrane 10 is cut at a position other than between yarn 14A1 and yarn 14A2 to expose a cross-section of the electrolyte membrane 10. In this manner, after obtaining 10 different cross sections, any optional yarn B (yarn 14B1 in Fig. 9) in each section is selected, and the maximum length $Y_{B12}$ and the maximum length $Y_{B11}$ in the selected yarn B, are measured.

The ratio of the average maximum length $YA_{B12}$, which is the arithmetic mean of the obtained 10 maximum lengths $Y_{B12}$, to the average maximum length $YA_{B11}$, which is the arithmetic mean of the obtained 10 maximum lengths $Y_{B11}$, is adopted as the aspect ratio $YA_{B12}/YA_{B11}$.

The aspect ratio $YA_{B12}/YA_{B11}$ is preferably from 0.5 to 3.5, and particularly preferably from 0.8 to 2.0, from such a viewpoint that the effects of the present invention will be more excellent.

The ratio of the aspect ratio $YA_{CB2}/YA_{CB1}$ to the aspect ratio $YA_{B12}/YA_{B11}$ $((YA_{CB2}/YA_{CB1})/(YA_{B12}/YA_{B11}))$ preferably exceeds 1, and is more preferably at least 1.2, further preferably at least 1.4, still further preferably at least 1.6, particularly preferably at least 2.2, and most preferably at least 2.4, from such a viewpoint that the effects of the present invention will be more excellent.

The upper limit of the above ratio $((YA_{CB2}/YA_{CB1})/(YA_{B12}/YA_{B11}))$ is preferably at most 4.0, more preferably at most 3.5, and particularly preferably at most 3.0, from such a viewpoint that it will be possible to prevent the occurrence of current shielding due to too large flatness in the intersection area.

The average maximum length $YA_{B12}$ is preferably from 20 to 140 μm, more preferably from 20 to 80 μm, and particularly preferably from 20 to 60 μm, from such a viewpoint that the effects of the present invention will be more excellent.

The average maximum length $YA_{B11}$ is preferably from 20 to 80 μm, more preferably from 20 to 60 μm, and particularly preferably from 20 to 40 μm, from such a viewpoint that the effects of the present invention will be more excellent.

Fig. 10 is a partial cross-sectional view showing an example when cut along the thickness direction of the electrolyte membrane in Fig. 6, in a direction parallel to the direction in which yarns A in the electrolyte membrane extend, and at a point where the distance is 3/4 of the distance between edge X2 and edge Y2 of the two adjacent yarns A, from edge X2 of one yarn A closer to the other yarn A toward edge Y2 of the other yarn A closer to the one yarn A. Specifically, Fig. 10 is the cross-section exposed when the electrolyte membrane 10 is cut at the B2-B2' line in Fig. 6. In the cross-section of the electrolyte membrane 10 in Fig. 10, the electrolyte 12 containing the fluorinated polymer (I) and yarn 14B1 and yarn 14B2 disposed in the electrolyte 12, are exposed.

Next, the calculation method for the aspect ratio $YA_{B22}/YA_{B21}$ will be described.

For each of the 10 different cross sections when cut along the thickness direction of the electrolyte membrane, in a direction parallel to the direction in which yarns A extend in the electrolyte membrane and at a point where the distance is 3/4 of the distance between edge X2 and edge Y2 of two adjacent yarns A, from edge X2 of one yarn A closer to the other yarn A toward edge Y2 of the other yarn A closer to the one yarn A, the maximum length $Y_{B21}$ in the thickness direction of the electrolyte membrane of yarns B and the maximum length $Y_{B22}$ in the direction orthogonal to the thickness direction of the electrolyte membrane of yarns B wherein the maximum length $Y_{B21}$ is measured, are measured.

Specifically, in the example in Fig. 10, the electrolyte membrane 10 is cut at the B2-B2' line located at a point where the distance is 3/4 of the distance between edge X2 and edge Y2, from edge X2 to edge Y2. This exposes a cross-section of the electrolyte membrane 10 as shown in Fig. 10. In the same manner, the electrolyte membrane 10 is cut at a position other than between yarn 14A1 and yarn 14A2 to expose a cross-section of the electrolyte membrane 10. In this manner, after obtaining 10 different cross sections, any optional yarn B (yarn 14B1 in Fig. 10) in each cross section is selected, and the maximum length $Y_{B22}$ and the maximum length $Y_{B21}$ for each cross section in the selected yarn B are measured.

The ratio of the average maximum length $YA_{B22}$, which is the arithmetic mean of the obtained 10 maximum lengths $Y_{B22}$, to the average maximum length $YA_{B21}$, which is the arithmetic mean of the obtained 10 maximum lengths $Y_{B21}$, is adopted as the aspect ratio $YA_{B22}/YA_{B21}$.

The aspect ratio $YA_{B22}/YA_{B21}$ is preferably from 0.5 to 3.5, and particularly preferably from 0.8 to 2.0, from such a viewpoint that the effects of the present invention will be more excellent.

The ratio of the aspect ratio $YA_{CB2}/YA_{CB1}$ to the aspect ratio $YA_{B22}/YA_{B21}$ $((YA_{CB2}/YA_{CB1})/(YA_{B22}/YA_{B21}))$ preferably exceeds 1, and is more preferably at least 1.2, further preferably at least 1.4, still further preferably at least 1.6, particularly preferably at least 2.2, and most preferably at least 2.4, from such a viewpoint that the effects of the present invention will be more excellent.

The upper limit of the above ratio $((YA_{CB2}/YA_{CB1})/(YA_{B22}/YA_{B21}))$ is at most 4.0, more preferably at most 3.5, and particularly preferably at most 3.0, from such a viewpoint that it will be possible to prevent the occurrence of current shielding due to too large flatness in the intersection area.

The average maximum length $YA_{B22}$ is preferably from 20 to 140 μm, more preferably from 20 to 80 μm, and particularly preferably from 20 to 60 μm, from such a viewpoint that the effects of the present invention will be more excellent.

The average maximum length $YA_{B21}$ is preferably from 20 to 80 μm, more preferably from 20 to 60 μm, and particularly preferably from 20 to 40 μm, from such a viewpoint that the effects of the present invention will be more excellent.

The maximum length of each of the above-mentioned yarns A and yarns B is measured by using a magnified image (e.g. 100 magnifications) of a cross section of the electrolyte membrane taken by an optical microscope (product name "BX-51", manufactured by Olympus Corporation).

As the method of making the respective aspect ratios to the above-mentioned values, a method of heat-pressing the woven fabric may be mentioned, although not limited thereto. As a result, the intersections of yarns A and yarns B tend to be crushed in the thickness direction as compared to the portions other than the intersections. Therefore, the respective aspect ratios can be adjusted to the above values.

The thickness of the electrolyte membrane is preferably from 30 to 400 μm, more preferably from 30 to 300 μm, further preferably from 30 to 200 μm, particularly preferably from 30 to 90 μm, and most preferably from 30 to 60 μm.

The thickness of the electrolyte membrane is measured by using a magnified image (e.g. 100 magnifications) of a cross-section of the electrolyte membrane taken by an optical microscope (product name "BX-51", manufactured by Olympus Corporation). Further, if the surface of the electrolyte membrane is uneven, the thicknesses of the concave portions at 10 points and the convex portions at 10 points in the electrolyte membrane are measured, and the arithmetic mean of the total of 20 thickness points is used as the thickness of the electrolyte membrane. However, if the convex portion contains the yarn A or B mentioned above, the thickness of the convex portion is the value obtained by subtracting the thickness of the yarn present in the convex portion.

<Woven fabric>

The aperture ratio of the woven fabric is preferably at least 50%, more preferably at least 55%, further preferably at least 60%, and particularly preferably at least 70%, from such a viewpoint that it will be possible to further reduce the electrolytic voltage when the electrolyte membrane is applied to various devices.

The upper limit value of the aperture ratio of the woven fabric is preferably at most 90%, and particularly preferably at most 80%, from such a viewpoint that the strength of the electrolyte membrane will be more excellent.

The aperture ratio of the woven fabric is calculated by the following formula (ε) based on the average diameter R1 of yarns and the average spacing P1 between adjacent yarns (hereinafter also referred to as "pitch P1").

Here, the average diameter R1 of yarns means the arithmetic mean of the diameters of 10 different yarns selected arbitrarily based on a magnified image of the woven fabric surface obtained by using a microscope (e.g. 100 magnifications). Further, the pitch P1 means the arithmetic mean of 10 spacing points at different locations selected arbitrarily based on a magnified image of the woven fabric surface obtained by using a microscope (e.g. 100 magnifications).

$$\text{Aperture ratio of woven fabric (\%)} = [P1/(P1+R1)]^2 \times 100 \quad (\varepsilon)$$

The denier count of yarns A and the denier count of yarns B constituting the woven fabric, are each preferably at least 2, more preferably at least 10, further preferably at least 15, and particularly preferably at least 20, from such a viewpoint that the strength and dimensional stability of the electrolyte membrane will be more excellent. Further, the denier count of yarns A and the denier count of yarns B may be the same or different.

The upper limit values of the denier count of yarns A and the denier count of yarns B constituting the woven fabric are each preferably at most 150, more preferably at most 120, further preferably at most 90, particularly preferably at most 60, and most preferably at most 50, from such a viewpoint that it will be possible to further reduce the electrolytic voltage when the electrolyte membrane is applied to various devices.

Here, the denier count is a value (g/9000m) having the mass of 9000m of yarn expressed in grams.

The densities of yarns A and yarns B are each preferably at least 19.7 yarns/cm (50 yarns/inch), more preferably at least 27.6 yarns/cm (70 yarns/inch), particularly preferably at least 35.4 yarns/cm (90 yarns/inch), from such a viewpoint that the strength and dimensional stability of the membrane electrode assembly will be excellent, and preferably at most 78.7 yarns/cm (200 yarns/inch), more preferably at most 59.1 yarns/cm (150 yarns/inch), particularly preferably at most 39.4 yarns/cm (100 yarns/inch), from such a viewpoint that it is possible to further reduce the electrolytic voltage when the electrolyte membrane is applied to various devices. Further, the densities of yarns A and yarns B may be the same or different.

Yarn A and yarn B may be composed of either a monofilament consisting of one filament or a multifilament consisting of two or more filaments, and a monofilament is preferred.

Yarns A and yarns B are each made of a material that does not elute in an alkaline aqueous solution, and specifically, yarns made of a material that does not elute even when immersed in an aqueous sodium hydroxide solution with a concentration of 32 mass%.

Yarns A and yarns B are each independently preferably composed of a material selected from the group consisting of polytetrafluoroethylene (hereinafter referred to also as "PTFE"), a tetrafluoroethylene-perfluoroalkyl vinyl ether copolymer (hereinafter referred to also as "PFA"), polyether ether ketone (hereinafter referred to also as "PEEK") and polyphenylene sulfide (hereinafter referred to also as "PPS") from such a viewpoint that the durability of yarns will be more excellent.

As yarns A and yarns B, slit yarns may be used, but when slit yarns are to be used, twisted yarns are preferred.

In the woven fabric, yarns A and yarns B are orthogonal to each other. Orthogonal means that the angle between yarns A and yarns B is 90±10 degrees.

Yarns A may be the warp or the weft of the woven fabric, but when yarns A are the weft, yarns B are the warp, and when yarns A are the warp, yarns B are the weft.

In a case where the material constituting the woven fabric is PTFE, the fabric weight of the woven fabric is preferably from 20 to 40 g/$m^2$, and particularly preferably from 30 to 40 g/$m^2$, as it provides an excellent balance between the strength and the handling efficiency of the electrolyte membrane.

In a case where the material constituting the woven fabric is PFA, the fabric weight of the woven fabric is preferably from 10 to 30 g/$m^2$, and particularly preferably from 15 to 25 g/$m^2$, as it provides an excellent balance between the strength and the handling efficiency of the electrolyte membrane.

In a case where the material constituting the woven fabric is PEEK, the fabric weight of the woven fabric is preferably from 5 to 40 g/$m^2$, and particularly preferably from 5 to 30 g/$m^2$, as it provides an excellent balance between the strength and the handling efficiency of the electrolyte membrane.

In a case where the material constituting the woven fabric is PPS, the fabric weight of the woven fabric is preferably from 5 to 40 g/$m^2$, and particularly preferably from 5 to 30 g/$m^2$, as it provides an excellent balance between the strength and the handling efficiency of the electrolyte membrane.

<Electrolyte>

The electrolyte contains a fluorinated polymer (I).

The ion exchange capacity of the fluorinated polymer (I) is preferably at least 0.90 milliequivalents/gram dry resin, more preferably larger than 1.10 milliequivalents/gram dry resin, further preferably at least 1.15 milliequivalents/gram dry resin, particularly preferably at least 1.20 milliequivalents/gram dry resin, and most preferably at least 1.25 milliequivalents/gram dry resin, from such a viewpoint that it will be possible to further reduce the electrolytic voltage when the electrolyte membrane is applied to various devices.

The upper limit value of the ion exchange capacity of the fluorinated polymer (I) is preferably at most 2.00 milliequivalents/gram dry resin, more preferably at most 1.50 milliequivalents/gram dry resin, and particularly preferably at most 1.43 milliequivalents/gram dry resin, from such a viewpoint that it will be possible to reduce the swelling of the electrolyte in areas where the density of yarns is lower.

The fluorinated polymer (I) to be used in the electrolyte membrane may be one type, or two or more types may be used as laminated or mixed.

Although the electrolyte membrane may contain polymers other than the fluorinated polymer (I), it is preferred that the polymer in the electrolyte membrane consists substantially of the fluorinated polymer (I). The term "consists substantially of the fluorinated polymer (I)" is meant that the content of the fluorinated polymer (I) is at least 95 mass% to the total mass of polymers in the electrolyte membrane. The upper limit of the content of the fluorinated polymer (I) may be 100 mass% to the total mass of polymers in the electrolyte membrane.

Specific examples of other polymers other than the fluorinated polymer (I) include one or more polyazole compounds selected from the group consisting of a polymer of a heterocyclic compound containing one or more nitrogen atoms in the ring, and a polymer of a heterocyclic compound containing one or more nitrogen atoms and oxygen and/or sulfur atoms in the ring.

Specific examples of the polyazole compounds include polyimidazole compounds, polybenzimidazole compounds, polybenzobisimidazole compounds, polybenzoxazole compounds, polyoxazole compounds, polythiazole compounds, and polybenzothiazole compounds.

Further, from the viewpoint of the oxidation resistance of the electrolyte membrane, as other polymers, a polyphenylene sulfide resin and a polyphenylene ether resin may also be mentioned.

The fluorinated polymer (I) has ion-exchange groups. As specific examples of ion exchange groups, sulfonic acid type functional groups and carboxylic acid type functional groups may be mentioned, and sulfonic acid type functional groups are preferred, from such a viewpoint that it will be possible to reduce the electrolytic voltage when the electrolyte membrane is applied to various devices.

In the following, a detailed description will be made mainly with respect to embodiments of a fluorinated polymer having sulfonic acid-type functional groups (hereinafter also referred to as a "fluorinated polymer (S)").

The fluorinated polymer (S) preferably contains units based on a fluorinated olefin and units having sulfonic acid-type functional groups and fluorine atoms.

As the fluorinated olefin, for example, a $C_{2-3}$ fluoroolefin having one or more fluorine atoms in the molecule may be mentioned. Specific examples of the fluoroolefin include tetrafluoroethylene (hereinafter referred to also as "TFE"), chlorotrifluoroethylene, vinylidene fluoride, vinyl fluoride, and hexafluoropropylene. Among these, TFE is preferred from such a viewpoint that it will be excellent in the production cost of the monomer, the reactivity with other monomers, and the properties of the obtainable fluorinated polymer (S).

As the fluorinated olefin, one type may be used alone, or two or more types may be used in combination.

As the units having sulfonic acid type functional groups and fluorine atoms, units represented by the formula (1) are preferred.

Formula (1): $-[CF_2-CF(-L-(SO_3M)_n)]-$

L is an n+1-valent perfluorohydrocarbon group optionally containing an etheric oxygen atom.

The etheric oxygen atom may be located at the terminal or between carbon-carbon atoms in the perfluorohydrocarbon group.

The number of carbon atoms in the n+1-valent perfluorohydrocarbon group is preferably at least 1, particularly preferably at least 2, and preferably at most 20, particularly preferably at most 10.

As L, an n+1-valent perfluoroaliphatic hydrocarbon group optionally containing an etheric oxygen atom is preferred, and a divalent perfluoroalkylene group optionally containing an etheric oxygen atom, which is an embodiment where n=1, or a trivalent perfluoroaliphatic hydrocarbon group optionally containing an etheric oxygen atom, which is an embodiment where n=2, is particularly preferred.

The above divalent perfluoroalkylene group may be linear or branched-chain.

M is a hydrogen atom, an alkali metal or a quaternary ammonium cation.

n is 1 or 2.

As the units represented by the formula (1), units represented by the formula (1-1), units represented by the formula (1-2), units represented by the formula (1-3) or units represented by the formula (1-4) are preferred.

Formula (1-1): $-[CF_2-CF(-O-R^{f1}-SO_3M)]-$

Formula (1-2): $-[CF_2-CF(-R^{f1}-SO_3M)]-$

Formula (1-3):

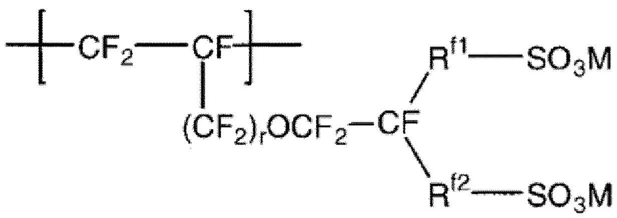

Formula (1-4):

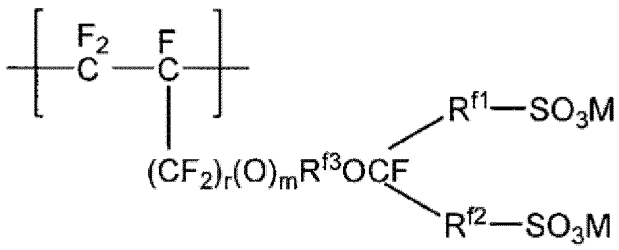

$R^{f1}$ is a perfluoroalkylene group optionally containing an oxygen atom between carbon-carbon atoms. The number of carbon atoms in the above perfluoroalkylene group is preferably at least 1, particularly preferably at least 2, and preferably at most 20, particularly preferably at most 10.

$R^{f2}$ is a single bond or a perfluoroalkylene group optionally containing an oxygen atom between carbon-carbon atoms. The number of carbon atoms in the above perfluoroalkylene group is preferably at least 1, particularly preferably at least 2, and preferably at most 20, particularly preferably at most 10.

$R^{f3}$ is a single bond or a perfluoroalkylene group optionally containing an oxygen atom between carbon-carbon atoms. The number of carbon atoms in the above perfluoroalkylene group is preferably at least 1, particularly preferably at least 2, and preferably at most 20, particularly preferably at most 10.

r is 0 or 1.

m is 0 or 1.

M is a hydrogen atom, an alkali metal or a quaternary ammonium cation.

As the units represented by the formula (1-1) and the units represented by the formula (1-2), units represented by the formula (1-5) are more preferred.

Formula (1-5): $-[CF_2-CF(-(CF_2)_x-(OCF_2CFY)_y-O-(CF_2)_z-SO_3M)]-$

x is 0 or 1, y is an integer of from 0 to 2, z is an integer of from 1 to 4, and Y is F or $CF_3$. M is as defined above.

As specific examples of the units represented by the formula (1-1), the following units may be mentioned. In the formulae, w is an integer of from 1 to 8, and x is an integer of from 1 to 5. The definition of M in the formulae is as defined above.

$-[CF_2-CF(-O-(CF_2)_w-SO_3M)]-$
$-[CF_2-CF(-O-CF_2CF(CF_3)-O-(CF_2)_w-SO_3M)]-$
$-[CF_2-CF(-(O-CF_2CF(CF_3))_x-SO_3M)]-$

As specific examples of the units represented by the formula (1-2), the following units may be mentioned. In the formulae, w is an integer of from 1 to 8. The definition of M in the formulae is as defined above.

$-[CF_2-CF(-(CF_2)_w-SO_3M)]-$
$-[CF_2-CF(-CF_2-O-(CF_2)_w-SO_3M)]-$

As the units represented by the formula (1-3), units represented by the formula (1-3-1) are preferred. The definition of M in the formula is as defined above.

Formula (1-3-1):

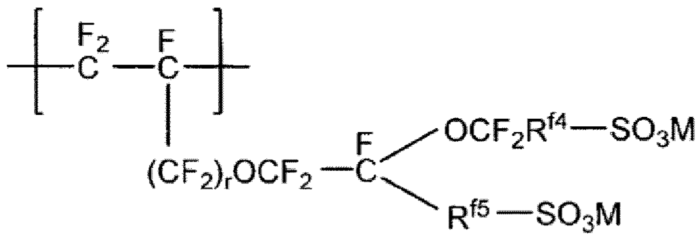

$R^{f4}$ is a $C_{1-6}$ linear perfluoroalkylene group, and $R^{f5}$ is a single bond or a $C_{1-6}$ linear perfluoroalkylene group

optionally containing an oxygen atom between carbon-carbon atoms. The definitions of r and M are defined as described above.

As specific examples of the units represented by the formula (1-3-1), the following may be mentioned.

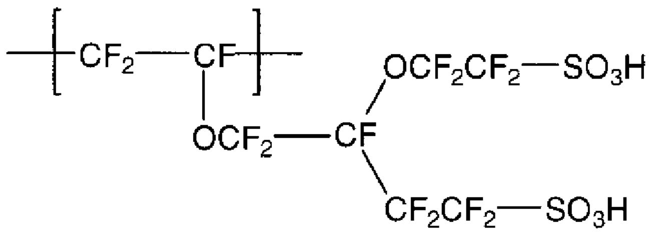

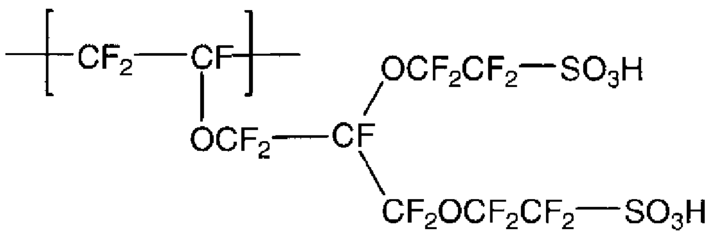

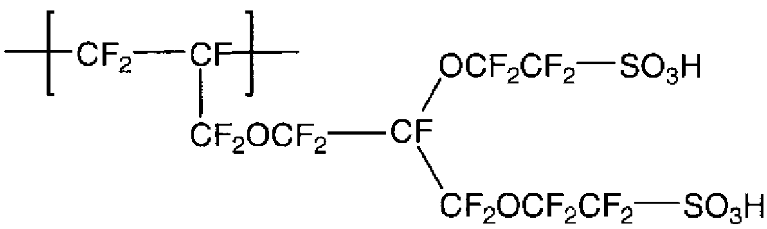

As the units represented by formula (1-4), units represented by the formula (1-4-1) are preferred. The definitions of $R^{f1}$, $R^{f2}$ and M in the formula are as defined above.

Formula (1-4-1):

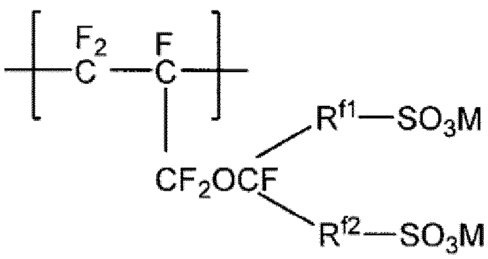

As specific examples of the units represented by formula (1-4-1), the following may be mentioned.

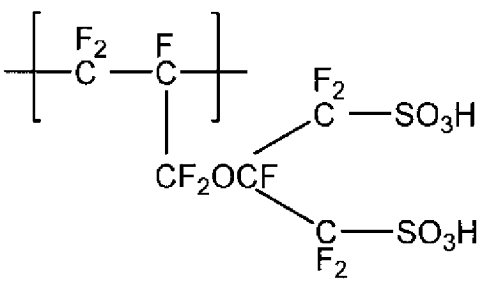

As the units having sulfonic acid type functional groups and fluorine atoms, one type may be used alone, or two or more types may be used in combination.

The fluorinated polymers (I) may contain units based on other monomers, other than the units based on a fluorinated olefins and units having sulfonic acid-type functional groups and fluorine atoms.

As specific examples of other monomers, $CF_2=CFR^{f6}$ (where $R^{f6}$ is a $C_{2-10}$ perfluoroalkyl group), $CF_2=CF-OR^{f7}$ (where $R^{f7}$ is a $C_{1-10}$ perfluoroalkyl group), and $CF_2=CFO(CF_2)_vCF=CF_2$ (where v is an integer of from 1 to 3) may be mentioned.

The content of the units based on other monomers is at most 30 mass% to the total units in the fluorinated polymer (I) from the viewpoint of maintaining the ion exchange performance.

The electrolyte membrane may have a monolayer or multilayer structure. In the case of a multilayer structure, for example, an embodiment may be mentioned, in which a plurality of layers containing the fluorinated polymer (I) and having different ion exchange capacities are laminated one on another.

<Production method for electrolyte membrane>

As the production method for the electrolyte membrane, a method of producing a membrane (hereinafter referred to also as a "precursor membrane") containing a polymer (hereinafter referred to also as a "fluorinated polymer (I')") of a fluorinated monomer (hereinafter referred to also as a "fluorinated monomer (I')") having groups which can be converted to ion-exchange groups, and a woven fabric, and then, converting the groups which can be converted to ion-exchange groups in the precursor membrane to ion-exchange groups.

The form of the woven fabric is as described above. As the woven fabric, it is preferred to use a heat-pressed woven fabric. This makes it easier to adjust the above-mentioned respective aspect ratios to the above mentioned values.

The fluorinated polymer (I') is preferably a polymer (hereinafter referred to also as a "fluorinated polymer (S')") of a fluorinated monomer (hereinafter referred to also as a "fluorinated monomer (S')") having a group which can be converted to a sulfonic acid-type functional group, and a copolymerized polymer of a fluorinated olefin and a monomer having a group which can be converted to a sulfonic acid type functional group and a fluorine atom, is particularly preferred.

In the following, a detailed description will be made with respect to the fluorinated polymer (S').

As the method of the copolymerization for the fluorinated polymer (S'), it is possible to employ a known method such as solution polymerization, suspension polymerization, emulsion polymerization, or the like.

As the fluorinated olefin, those exemplified earlier may be mentioned, and TFE is preferred because it is excellent in the production cost of the monomer, the reactivity with other monomers, and the properties of the obtainable fluorinated polymer (S).

As the fluorinated olefin, one type may be used alone, or two or more types may be used in combination.

As the fluorinated monomer (S'), a compound which has at least one fluorine atom in the molecule, has an ethylenic double bond, and has a group which can be converted to a sulfonic acid-type functional group, may be mentioned.

As the fluorinated monomer (S'), a compound represented by the formula (2) is preferred from such a viewpoint that it is excellent in the production cost of the monomer, the reactivity with other monomers, and the properties of the obtainable fluorinated polymer (S).

Formula (2): $CF_2=CF-L-(A)_n$

The definitions of L and n in the formula (2) are as defined above.

A is a group which can be converted to a sulfonic acid type functional group. As the group which can be converted to a sulfonic acid type functional group, a functional group which can be converted to a sulfonic acid type functional group by hydrolysis, is preferred. As specific examples of the group which can be converted to a sulfonic acid type functional group, $-SO_2F$, $-SO_2Cl$, and $-SO_2Br$ may be mentioned.

As the compound represented by the formula (2), a compound represented by the formula (2-1), a compound represented by the formula (2-2), a compound represented by the formula (2-3), and a compound represented by the formula (2-4), are preferred.

Formula (2-1): $CF_2=CF-O-R^{f1}-A$

Formula (2-2): $CF_2=CF-R^{f1}-A$

Formula (2-3):

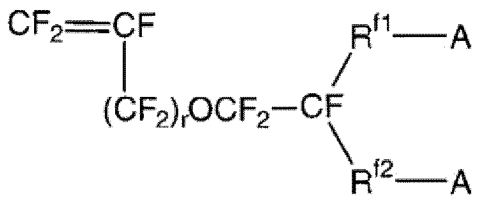

The definitions of $R^{f1}$, $R^{f2}$, r and A in the formulae are as defined above.

Formula (2-4):

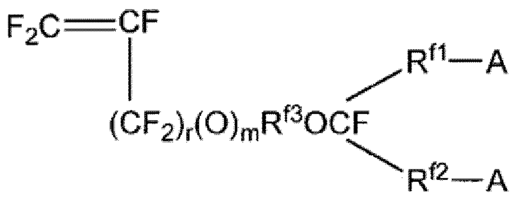

The definitions of $R^{f1}$, $R^{f2}$, $R^{f3}$, r, m and A in the formula are as defined above.

As the compound represented by the formula (2-1) and the compound represented by the formula (2-1), a compound represented by the formula (2-5) is preferred.

Formula (2-5): $CF_2=CF-(CF_2)_x-(OCF_2CFY)_y-O-(CF_2)_z-SO_3M$

The definitions of M, x, y, z and Y in the formula are as defined above.

As specific examples of the compound represented by the formula (2-1), the following compounds may be mentioned. In the formulae, w is an integer of from 1 to 8, and x is an integer of from 1 to 5.

$CF_2=CF-O-(CF_2)_w-SO_2F$
$CF_2=CF-O-CF_2CF(CF_3)-O-(CF_2)_w-SO_2F$
$CF_2=CF-[O-CF_2CF(CF_3)]_x-SO_2F$

As specific examples of the compound represented by the formula (2-2), the following compounds may be mentioned. In the formulae, w is an integer of from 1 to 8.

$CF_2=CF-(CF_2)_w-SO_2F$
$CF_2=CF-CF_2-O-(CF_2)_w-SO_2F$

As the compound represented by the formula (2-3), a compound represented by the formula (2-3-1) is preferred.

Formula (2-3-1):

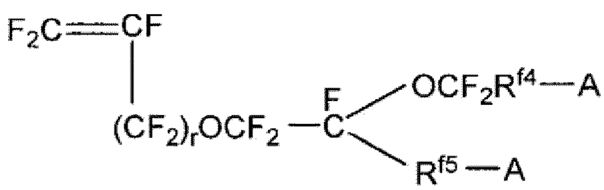

The definitions of $R^{f4}$, $R^{f5}$, r and A in the formula are as defined above.

As specific examples of the compound represented by the formula (2-3-1), the following may be mentioned.

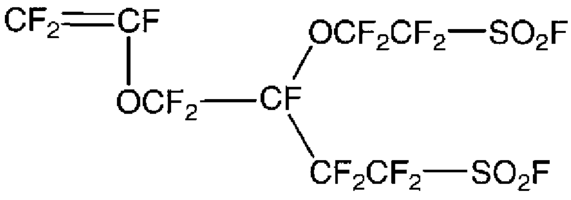

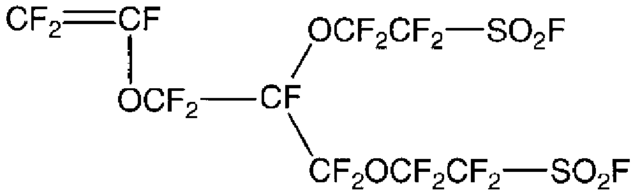

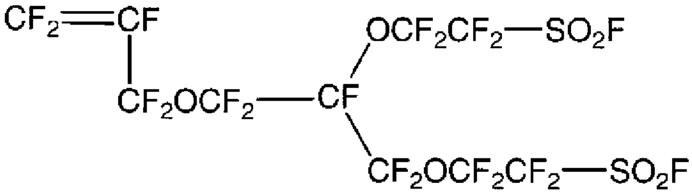

As the compound represented by the formula (2-4), a compound represented by the formula (2-4-1) is preferred.

Formula (2-4-1):

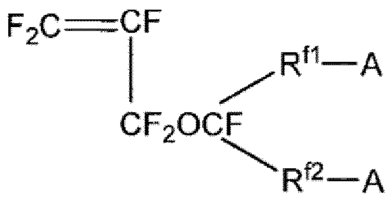

The definitions of $R^{f1}$, $R^{f2}$ and A in the formula are as defined above.

As a specific example of the compound represented by the formula (2-4-1), the following may be mentioned.

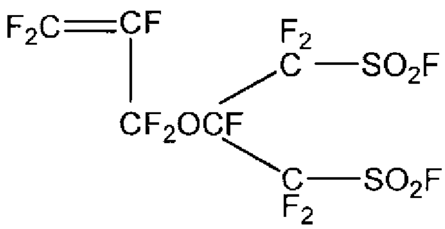

As the fluorinated monomer (S'), one type may be used alone, or two or more types may be used in combination.

In the production of the fluorinated polymers (S'), in addition to the fluorinated olefin and the fluorinated monomer (S'), other monomers may be used. As other monomers, those previously exemplified may be mentioned.

The ion exchange capacity of the fluorinated polymer (I') can be adjusted by varying the content of groups which can be converted to ion exchange groups in the fluorinated polymer (I').

As a specific example of the production method for the precursor membrane, an extrusion method may be mentioned. More specifically, a method of forming a membrane (I') consisting of a fluorinated polymer (I'), and then arranging the membrane (I'), a woven fabric and the membrane (I') in this order, followed by laminating them by using a laminating roll or vacuum laminating device, may be mentioned.

As a specific example of the method for converting groups in the precursor membrane which can be converted to ion-exchange groups to ion-exchange groups, a method of applying treatment such as hydrolysis treatment or acidification treatment to the precursor membrane, may be mentioned.

Among them, a method of contacting the precursor membrane with an alkaline aqueous solution, is particularly

preferred.

As specific examples of the method of contacting the precursor membrane with an alkaline aqueous solution, a method of immersing the precursor membrane in the alkaline aqueous solution, and a method of spray coating the surface of the precursor membrane with the alkaline aqueous solution, may be mentioned.

The temperature of the alkaline aqueous solution is preferably from 30 to 100°C and particularly preferably from 40 to 100°C. The contact time between the precursor membrane and the alkaline aqueous solution is preferably from 3 to 150 minutes and particularly preferably from 5 to 50 minutes.

The alkaline aqueous solution preferably contains an alkali metal hydroxide, a water-soluble organic solvent and water.

As the alkali metal hydroxide, sodium hydroxide and potassium hydroxide may be mentioned.

In this specification, a water-soluble organic solvent is an organic solvent which is readily soluble in water, and specifically, an organic solvent with a solubility of at least 0.1 g in 1,000 ml (20°C) of water is preferred, and an organic solvent with a solubility of at least 0.5 g is particularly preferred. The water-soluble organic solvent preferably contains at least one type selected from the group consisting of a non-protonic organic solvent, an alcohol and an amino alcohol, and it is particularly preferred to contain a non-protonic organic solvent.

As the water-soluble organic solvent, one type may be used alone, or two or more types may be used in combination.

As specific examples of the non-protonic organic solvent, dimethyl sulfoxide, N,N-dimethylformamide, N,N-dimethylacetamide, N-methyl-2-pyrrolidone and N-ethyl-2-pyrrolidone may be mentioned, and dimethyl sulfoxide is preferred.

As specific examples of the alcohol, methanol, ethanol, isopropanol, butanol, methoxyethoxyethanol, butoxyethanol, butylcarbitol, hexyloxyethanol, octanol, 1-methoxy-2-propanol and ethylene glycol may be mentioned.

As specific examples of the aminoalcohol, ethanolamine, N-methylethanolamine, N-ethylethanolamine, 1-amino-2-propanol, 1-amino-3-propanol, 2-aminoethoxyethanol, 2-aminothioethoxyethanol and 2-amino-2-methyl-1-propanol may be mentioned.

The concentration of the alkali metal hydroxide is preferably from 1 to 60 mass%, and particularly preferably from 3 to 55 mass%, in the alkaline aqueous solution.

The content of the water-soluble organic solvent is preferably from 1 to 60 mass%, and particularly preferably from 3 to 55 mass%, in the alkaline aqueous solution.

The concentration of water is preferably from 39 to 80 mass% in the alkaline aqueous solution.

After contact of the precursor membrane with the alkaline aqueous solution, treatment to remove the alkaline aqueous solution may be carried out. As the method for removing the alkaline aqueous solution, for example, a method of washing the precursor membrane contacted with the alkaline aqueous solution, with water, may be mentioned.

After contact of the precursor membrane with the alkaline aqueous solution, the obtained membrane may be contacted with an acidic aqueous solution to convert the ion exchange groups to the acid form.

As specific examples of the method of contacting the precursor membrane with the acidic aqueous solution, a method of immersing the precursor membrane in the acidic aqueous solution, and a method of spray coating the surface of the precursor membrane with the acidic aqueous solution, may be mentioned.

The acidic aqueous solution preferably contains an acid component and water.

As specific examples of the acid component, hydrochloric acid and sulfuric acid may be mentioned.

<Applications>

The electrolyte membrane of the present invention can be used as an electrolyte membrane to be used in a water electrolysis apparatus (e.g. a diaphragm membrane in an alkaline chloride electrolysis apparatus, or a solid polymer electrolyte membrane in a solid polymer water electrolysis apparatus), or a cation exchange membrane to be used in a redox flow battery.

[Electrolysis apparatus]

The electrolysis apparatus of the present invention contains the above-described electrolyte membrane. Since the electrolysis apparatus of the present invention contains the above-described electrolyte membrane, generation of pinholes in the electrolyte membrane can be suppressed. As a result, the electrolysis voltage can be reduced.

As specific examples of the electrolysis apparatus, an alkali chloride electrolysis apparatus and a solid polymer water electrolysis apparatus may be mentioned. The electrolysis apparatus of the present invention can have the same construction as known electrolysis apparatuses, except that it has the above-described electrolyte membrane.

[Redox flow battery]

The redox flow battery of the present invention contains the above-described electrolyte membrane. Since the redox flow battery of the present invention contains the above-described electrolyte membrane, generation of pinholes in the electrolyte membrane can be suppressed. This can prevent the reduction of liquid migration of the cathode liquid and anode liquid and the reduction of capacity retention.

The redox flow battery can have the same construction as known redox flow batteries, except that it has the above-described electrolyte membrane.

EXAMPLES

In the following, the present invention will be described in detail with reference to Examples. Ex. 1 to Ex. 4 are Examples of the present invention, and Ex. 5 to Ex. 6 are Comparative Examples. However, the present invention is not limited to these Examples.

[Aspect ratios]

Aspect ratio $YA_{CA2}/YA_{CA1}$, aspect ratio $YA_{A2}/YA_{A1}$, $(YA_{CA2}/YA_{CA1})/(YA_{A2}/YA_{A1})$, aspect ratio $YA_{CB2}/YA_{CB1}$, aspect ratio $YA_{B2}/YA_{B1}$, and $(YA_{CB2}/YA_{CB1})/(YA_{B2}/YA_{B1})$ of the woven fabric in the electrolyte membrane were calculated in accordance with the methods described in the above section for description of the electrolyte membrane.

[Fabric weight of woven fabric]

The woven fabric raw material used was cut in a 20 x 20 cm size and its mass was measured. The above measurements were carried out five times, and based on the average value, the fabric weight (g/m$^2$) of the woven fabric was obtained.

[Densities of warp yarns and weft yarns constituting the woven fabric]

The densities of warp yarns and weft yarns constituting the woven fabric were calculated in accordance with the following method. For each of warp yarns and weft yarns, the density was calculated by converting the average value of five measurements of the lengths constituting 10 yarns from the observation image of an optical microscope into a density (yarns/cm).

[Number of pinholes after electrolytic evaluation]

A polymer (ion exchange capacity: 1.10 milliequivalents/gram dry resin) having TFE and the later-described monomer (X) copolymerized and having converted to acid type through hydrolysis and acid treatment, was dispersed in a solvent of water/ethanol=40/60 (mass%) at a solid concentration of 25.8% to obtain a dispersion (hereinafter referred to also as the "dispersion X"). To the obtained dispersion X (19.0 g), ethanol (0.52 g) and water (3.34 g) were added, and further, an iridium oxide catalyst (manufactured by TANAKA Kikinzoku Kogyo K.K.) (13.0 g) containing 76 mass% of iridium, was added into the dispersion. The obtained mixture was treated in a planetary bead mill (rotation speed 300 rpm) for 30 minutes, then water (4.49 g) and ethanol (4.53 g) were added, and further treated in a planetary bead mill (rotation speed 200 rpm) for 60 minutes to obtain an anode catalyst ink with a solid content concentration of 40 mass%.

On one surface of a solid polymer electrolyte membrane obtained by the procedure as described below, an anode catalyst ink was coated with a bar coater so that iridium became 2.0 mg/cm$^2$, dried at 80°C for 10 minutes, and then heat treated at 150°C for 15 minutes to obtain an anode catalyst layer-attached electrolyte membrane.

To a supported catalyst (manufactured by TANAKA Kikinzoku Kogyo K.K., "TEC10E50E") (11 g) having 46 mass% platinum supported on carbon powder, water (59.4 g) and ethanol (39.6 g) were added, and mixed and pulverized by using an ultrasonic homogenizer to obtain a dispersion of the catalyst.

To the dispersion of the catalyst, a mixture (29.2 g) having the dispersion X (20.1 g), ethanol (11 g) and Zeolora-H (manufactured by Zeon Japan) (6.3 g) preliminarily mixed and kneaded, was added. Further, water (3.66 g) and ethanol (7.63 g) were added to the obtained dispersion, and mixed by using a paint conditioner for 60 minutes to bring the solid concentration to be 10.0 mass% to obtain a cathode catalyst ink.

Onto an ETFE sheet, the cathode catalyst ink was applied by a die coater, dried at 80°C, and then heat treated at 150°C for 15 minutes to obtain a cathode catalyst layer decal with a platinum content of 0.4 mg/cm$^2$.

Letting the surface of the anode catalyst layer-attached electrolyte membrane on which the anode catalyst layer was not formed, and the surface of the cathode catalyst layer decal on which the catalyst layer was present, to face each

other, and heat pressing them under conditions of a pressing temperature of 150°C for 2 minutes under a pressure of 3 MPa to bond the anode catalyst layer-attached electrolyte membrane and the cathode catalyst layer, and then the temperature was lowered to 70°C and the pressure was released, whereupon the product was taken out, and the ETFE sheet of the cathode catalyst layer decal was peeled off to obtain a membrane electrode assembly with an electrode area of 25 $cm^2$.

The membrane electrode assembly obtained in the above procedure was heat-treated at 150°C for 15 minutes and then set in a water electrolysis evaluation jig EH50-25 (manufactured by Greenlight innovation).

Next, first, in order to sufficiently hydrate the solid polymer electrolyte membrane and both electrode ionomers, pure water with conductivity of at most 1.0 μS/cm at a temperature of 80°C under normal pressure, was supplied to both the anode side and the cathode side at a flow rate of 50 mL/min for 12 hours. Then, the cathode side was purged with nitrogen.

After the nitrogen purge, to the anode side, pure water with conductivity of at most 1.0 μS/cm at a temperature of 80°C under normal pressure, was supplied at a flow rate of 50 mL/min, and while the generated gas pressure on the cathode side was kept at atmospheric pressure, the system was operated for 300 hours at a current density of 2 A/$cm^2$ by using the DC power source PWR1600L manufactured by KIKUSUI

ELECTRONICS CORPORATION.

After the operation, the number of pinholes (holes) in the solid polymer electrolyte membrane of the membrane electrode assembly was measured by using a pinhole inspection system (product name: TRS-70, manufactured by SANKO ELECTRONIC LABORATORY CO., LTD.).

◎: There were no pinholes.
○: One or two pinholes were present.
×: There were more than 3 pinholes.

[Production of fluorinated polymer (S'-1)]

$CF_2=CF_2$ and monomer (X) represented by the following formula (X) were copolymerized to obtain a fluorinated polymer (S'-1) (ion exchange capacity: 1.25 milliequivalents/gram dry resin).

$$CF_2=CF\text{-}O\text{-}CF_2CF(CF_3)\text{-}O\text{-}CF_2CF_2\text{-}SO_2F \qquad (X)$$

Here, the ion exchange capacity disclosed in the above [Production of fluorinated polymer (S'-1)] is the ion exchange capacity of a fluorinated polymer obtainable by hydrolyzing the fluorinated polymer (S'-1) by the procedure as described below.

[Production of film-attached substrate Y1]

On a substrate made of a polyethylene terephthalate film (melting point: 250 to 260°C), a fluorinated polymer (S'-1) was attached by a melt-extrusion method to obtain a film-attached substrate Y1 having a film α1 (film thickness: 45 μm) consisting of the fluorinated polymer (S'-1) formed on the substrate.

[Production of film-attached substrate Y2]

On a substrate made of a polyethylene terephthalate film (melting point: 250 to 260°C), a fluorinated polymer (S'-1) was attached by a melt-extrusion method to obtain a film-attached substrate Y2 having a film α2 (film thickness: 30 μm) consisting of the fluorinated polymer (S'-1) formed on the substrate.

[Production of woven fabric A1-1]

Using 24.2 denier yarns made of PFA as warp yarns and weft yarns, plain weaving was conducted so that the density of PFA yarns became 39.4 yarns/cm (100 yarns/inch), to obtain woven fabric A1. The fabric weight of woven fabric A1 was 21.2 g/$m^2$. The warp yarns and weft yarns were composed of monofilaments.

Woven fabric A1 was heat-pressed by a flat press machine at a temperature of 160°C under a surface pressure of 30 MPa/$m^2$ for 10 minutes to obtain woven fabric A1-1.

[Production of woven fabric A1-2]

The above-mentioned woven fabric A1 was heat-pressed in a flat press machine at a temperature of 160°C under a surface pressure of 40 MPa/$m^2$ for 10 minutes to obtain woven fabric A1-2.

[Production of woven fabric A1-3]

The above-mentioned woven fabric A1 was heat-pressed by a flat press machine at a temperature of 200°C under a surface pressure of 40 MPa/$m^2$ for 10 minutes to obtain woven fabric A1-3.

[Production of woven fabric A2]

Using 23.6 denier yarns made of PTFE as warp yarns and weft yarns, plain weaving was conducted so that the density of PTFE yarns became 10.6 yarns/cm (27 yarns/inch), to obtain woven fabric A2. The fabric weight of woven fabric A2 was 23.6 g/$m^2$. Here, the warp yarns and weft yarns were composed of slit yarns.

[Ex. 1]

Film-attached substrate Y1/woven fabric A1-1/film-attached substrate Y1 were overlaid in this order. Here, the film-attached substrate Y1 was placed so that the film $\alpha$1 in the film-attached substrate Y1 was in contact with the woven fabric A1-1. Further, the woven fabric A1-1 was used after brushing the surface with a brush having polypropylene bristles.

After heat-pressing the respective overlaid materials for 10 minutes by a flat press machine at a temperature of 200°C under a surface pressure of 30 MPa/$m^2$, the substrates on both sides were peeled off at a temperature of 50°C to obtain a precursor membrane.

The precursor membrane was immersed in a solution of dimethyl sulfoxide/potassium hydroxide/-water=30/5.5/64.5 (mass ratio) at 95°C for 30 minutes to hydrolyze the groups in the precursor membrane which can be converted sulfonic acid-type functional groups, to convert them to K-type sulfonic acid-type functional groups, and then washed. Then the obtained membrane was immersed in 1M sulfuric acid to convert the terminal groups from K-type to H-type, followed by drying to obtain an electrolyte membrane (solid polymer electrolyte membrane).

Using the obtained electrolyte membranes, measurements of the aspect ratios of the woven fabrics in the electrolyte membrane and measurements of the number of pinholes after electrolytic evaluation were carried out. The results are shown in Table 1.

[Ex. 2 to 6]

Except that types of the film-attached substrate and the woven fabric were changed as shown in Table 1, electrolyte membranes were prepared, and measurements of the aspect ratios of the woven fabrics in the electrolyte membrane and measurements of the number of pinholes after electrolytic evaluation were conducted in the same manner as in Ex. 1. Here, also with respect to the woven fabric used in each Ex., it was used after brushing the surface by using a brush having polypropylene bristles, in the same manner as in Ex. 1. The results are shown in Table 1. Further, in Table 1, "unprocessed" in Ex. 5 and 6 means that woven fabric A1 or woven fabric A2 was not heat-pressed.

The "denier count (g/9000m)" in Table 1 represents the denier count of the warp yarns (yarns A) and weft yarns (yarns B) constituting the woven fabric. Further, in all of Ex. 1 to 6, the denier counts of the warp yarns and weft yarns constituting the woven fabric were the same.

Further, in all of Ex. 1 to 6, the densities of the warp yarns and weft yarns constituting the woven fabric were the same.

Further, as shown in Table 1, in all of Ex. 1 to 6, the aspect ratio $YA_{A2}/YA_{A1}$ and the aspect ratio $YA_{B2}/YA_{B1}$ were the same values.

Further, as shown in Table 1, in all of Ex. 1 to 6, the aspect ratio $YA_{CA2}/YA_{CA1}$ and the aspect ratio $YA_{CB2}/YA_{CB1}$ were the same values.

Further, as shown in Table 1, in all of Ex. 1 to 6, $(YA_{CA2}/YA_{CA1})/(YA_{A2}/YA_{A1})$ and $(YA_{CB2}/YA_{CB1})/(YA_{B2}/YA_{B1})$ were the same values.

[Table 1]

| | Film | | Substrate | Film-attached substrate | | Ion exchange capacity of fluorinated polymer (milliequivalents/ gram dry resin) |
|---|---|---|---|---|---|---|
| | Type | Monomer species | Type | Type | Total thickness of film (μm) | |
| Ex. 1 | α1 | TFE/monomer (X) | PET | Y1 | 90 | 1.25 |
| Ex. 2 | α1 | TFE/monomer (X) | PET | Y1 | 90 | 1.25 |
| Ex. 3 | α1 | TFE/monomer (X) | PET | Y1 | 90 | 1.25 |
| Ex. 4 | α2 | TFE/monomer (X) | PET | Y2 | 60 | 1.25 |
| Ex. 5 | α1 | TFE/monomer (X) | PET | Y1 | 90 | 1.25 |
| Ex. 6 | α1 | TFE/monomer (X) | PET | Y1 | 90 | 1.25 |

[Table 1] (continued)

| | Woven fabric | | | | | | Aspect ratio | Aspect ratio | $(YA_{CA2}/YA_{CA1})/(YA_{A2}/YA_{A1})$ and $(YA_{CB2}/YA_{CB1})/(YA_{B2}/YA_{B1})$ | Number of pinholes after electrolytic evaluation |
|---|---|---|---|---|---|---|---|---|---|---|
| | Type (Before processing) | Type (After processing) | Fabric weight ($g/m^2$) | Denier count (g/9000m) | Density (yarn/cm) | Material | $YA_{A2}/YA_{A1}$ and $YA_{B2}/YA_{B1}$ | $YA_{CA2}/YA_{CA1}$ and $YA_{CB2}/YA_{CB1}$ | | |
| Ex. 1 | A1 | A1-1 | 21.2 | 24.2 | 39.4 | PFA | 1.2 | 2.3 | 1.9 | ○ |
| Ex. 2 | A1 | A1-2 | 21.2 | 24.2 | 39.4 | PFA | 1.2 | 2.9 | 2.4 | ○ |
| Ex. 3 | A1 | A1-3 | 21.2 | 24.2 | 39.4 | PFA | 1.9 | 4.7 | 2.5 | ◎ |
| Ex. 4 | A1 | A1-3 | 21.2 | 24.2 | 39.4 | PFA | 1.9 | 4.7 | 2.5 | ◎ |
| Ex. 5 | A1 | Unprocessed | 21.2 | 24.2 | 39.4 | PFA | 1.0 | 1.0 | 1.0 | × |
| Ex .6 | A2 | Unprocessed | 23.6 | 100 | 10.6 | PTFE | 2.3 | 2.3 | 1.0 | × |

As shown in Table 1, it has been confirmed that generation of pinholes in the electrolyte membrane can be suppressed when the electrolyte membrane is used in a cell having an anode and a cathode for a long period of time by applying a voltage if the electrolyte membrane contains a woven fabric whose aspect ratio $YA_{CA2}/YA_{CA1}$ and aspect ratio $YA_{CB2}/YA_{CB1}$ each exceed 1 such that said aspect ratio $YA_{CA2}/YA_{CA1}$ and said aspect ratio $YA_{CB2}/YA_{CB1}$ are each at least 1.2, and whose $(YA_{CA2}/YA_{CA1})/(YA_{A2}/YA_{A1})$ and $(YA_{CB2}/YA_{CB1})/(YA_{B2}/YA_{B1})$ each exceed 1 such that said $(YA_{CA2}/YA_{CA1})/(YA_{A2}/YA_{A1})$ and said $(YA_{CB2}/YA_{CB1})/(YA_{B2}/YA_{B1})$ are each at least 1.2 (Ex. 1 to 4).

With respect to the woven fabric in the electrolyte membrane in each Ex., the aspect ratio $YA_{A12}/YA_{A11}$, the aspect ratio $YA_{A22}/YA_{A21}$, the aspect ratio $YA_{B12}/YA_{B11}$ and the aspect ratio $YA_{B22}/YA_{B21}$ were calculated in accordance with the methods described in the above description of the electrolyte membrane. As a result, the aspect ratio $YA_{A12}/YA_{A11}$, the aspect ratio $YA_{A22}/YA_{A21}$, the aspect ratio $YA_{B12}/YA_{B11}$ and the aspect ratio $YA_{B22}/YA_{B21}$ in each Ex. were the same as the aspect ratio $YA_{A2}/YA_{A1}$ and the aspect ratio $YA_{B2}/YA_{B1}$ in each Ex.

REFERENCE SYMBOLS

10: Electrolyte membrane
12: Electrolyte
14: Woven fabric
14A1, 14A2, 14A3, 14A4: Yarns
14B1, 14B2, 14B3, 14B4: Yarns
$Y_{CA1}$, $Y_{CA2}$, $Y_{A1}$, $Y_{A2}$, $Y_{A11}$, $Y_{A12}$, $Y_{A21}$, $Y_{A22}$: Maximum Length
$Y_{CB1}$, $Y_{CB2}$, $Y_{B1}$, $Y_{B2}$, $Y_{B11}$, $Y_{B12}$, $Y_{B21}$, $Y_{B22}$: Maximum Length
X1, X2, Y1, Y2: Edge

## Claims

1. An electrolyte membrane (10) comprising a fluorinated polymer having ion-exchange groups, and a woven fabric (14), wherein

said woven fabric (14) consists of yarns A (14A1, 14A2, 14A3, 14A4) extending in one direction and yarns B (14B1, 14B2, 14B3, 14B4) extending in a direction orthogonal to said yarns A (14A1, 14A2, 14A3, 14A4),
said yarns A (14A1, 14A2, 14A3, 14A4) and said yarns B (14B1, 14B2, 14B3, 14B4) are each made of a material that does not elute into an alkaline aqueous solution,
for each of ten different cross sections when cut along the thickness direction of said electrolyte membrane (10) through the center positions of said yarns B (14B1, 14B2, 14B3, 14B4) in said electrolyte membrane (10), measuring the maximum length $Y_{CA1}$ in the thickness direction of said electrolyte membrane (10) of said yarns A (14A1, 14A2, 14A3, 14A4) and the maximum length $Y_{CA2}$ in the direction orthogonal to the thickness direction of said electrolyte membrane (10) of said yarns A (14A1, 14A2, 14A3, 14A4), wherein said maximum length $Y_{CA1}$ is measured, and calculating the aspect ratio $YA_{CA2}/YA_{CA1}$ between the average maximum length $YA_{CA1}$, which is the arithmetic mean of the obtained 10 maximum lengths $Y_{CA1}$ and the average maximum length $YA_{CA2}$, which is the arithmetic mean of the obtained 10 maximum lengths $Y_{CA2}$, and
for each of ten different cross-sections when cut along the thickness direction of said electrolyte membrane (10) in a direction parallel to the direction in which said yarns B (14B1, 14B2, 14B3, 14B4) extend in said electrolyte membrane (10) and at a midpoint between said yarns B (14B1, 14B2, 14B3, 14B4), measuring the maximum length $Y_{A1}$ in the thickness direction of said electrolyte membrane (10) of said yarns A (14A1, 14A2, 14A3, 14A4) and the maximum length $Y_{A2}$ in the direction orthogonal to the thickness direction of said electrolyte membrane (10) of said yarns A (14A1, 14A2, 14A3, 14A4), wherein said maximum length $Y_{A1}$ is measured, and calculating the aspect ratio $YA_{A2}/YA_{A1}$ between the average maximum length $YA_{A1}$, which is the arithmetic mean of the obtained 10 maximum lengths $Y_{A1}$ and the average maximum length $YA_{A2}$, which is the arithmetic mean of the obtained 10 maximum lengths $Y_{A2}$, whereby
said aspect ratio $YA_{CA2}/YA_{CA1}$ exceeds 1 and is larger than said aspect ratio $YA_{A2}/YA_{A1}$,
further, for each of ten different cross sections when cut along the thickness direction of said electrolyte membrane (10) through the center positions of said yarns A (14A1, 14A2, 14A3, 14A4) in said electrolyte membrane (10), measuring the maximum length $Y_{CB1}$ in the thickness direction of said electrolyte membrane (10) of said yarns B (14B1, 14B2, 14B3, 14B4) and the maximum length $Y_{CB2}$ in the direction orthogonal to the thickness direction of said electrolyte membrane (10) of said yarns B (14B1, 14B2, 14B3, 14B4), wherein said

maximum length $Y_{CB1}$ is measured, and calculating the aspect ratio $YA_{CB2}/YA_{CB1}$ between the average maximum length $YA_{CB1}$, which is the arithmetic mean of the obtained 10 maximum lengths $Y_{CB1}$ and the average maximum length $YA_{CB2}$, which is the arithmetic mean of the obtained 10 maximum lengths $Y_{CB2}$, and
for each of ten different cross sections when cut along the thickness direction of said electrolyte membrane (10) in a direction parallel to the direction in which said yarns A (14A1, 14A2, 14A3, 14A4) extend and at a midpoint between said yarns A (14A1, 14A2, 14A3, 14A4), measuring the maximum length $Y_{B1}$ in the thickness direction of said electrolyte membrane (10) of said yarns B (14B1, 14B2, 14B3, 14B4) and the maximum length $Y_{B2}$ in the direction orthogonal to the thickness direction of said electrolyte membrane (10) of said yarns B (14B1, 14B2, 14B3, 14B4), wherein said maximum length $Y_{B1}$ is measured, and calculating the aspect ratio $YA_{B2}/YA_{B1}$ between the average maximum length $YA_{B1}$, which is the arithmetic mean of the obtained 10 maximum lengths $Y_{B1}$ and the average maximum length $YA_{B2}$, which is the arithmetic mean of the obtained 10 maximum lengths $Y_{B2}$, whereby
said aspect ratio $YA_{CB2}/YA_{CB1}$ exceeds 1 and is larger than said aspect ratio $YA_{B2}/YA_{B1}$, and
wherein said aspect ratio $YA_{CA2}/YA_{CA1}$ and said aspect ratio $YA_{CB2}/YA_{CB1}$ are each at least 1.2, and the ratio of said aspect ratio $YA_{CA2}/YA_{CA1}$ to said aspect ratio $YA_{A2}/YA_{A1}$ and the ratio of said aspect ratio $YA_{CB2}/YA_{CB1}$ to said aspect ratio $YA_{B2}/YA_{B1}$ are each at least 1.2.

**2.** The electrolyte membrane (10) according to Claim 1, wherein said aspect ratio $YA_{A2}/YA_{A1}$ and said aspect ratio $YA_{B2}/YA_{B1}$ are each from 0.8 to 3.5.

**3.** The electrolyte membrane (10) according to Claim 1 or 2, wherein the denier count of said yarns A (14A1, 14A2, 14A3, 14A4) and the denier count of said yarns B (14B1, 14B2, 14B3, 14B4) are each from 15 to 50.

**4.** The electrolyte membrane (10) according to any one of Claims 1 to 3, wherein said yarns A (14A1, 14A2, 14A3, 14A4) and said yarns B (14B1, 14B2, 14B3, 14B4) are each independently composed of a material selected from the group consisting of polytetrafluoroethylene, a tetrafluoroethylene-perfluoroalkyl vinyl ether copolymer, polyether ether ketone and polyphenylene sulfide.

**5.** The electrolyte membrane (10) according to any one of Claims 1 to 4, wherein the densities of said yarns A (14A1, 14A2, 14A3, 14A4) and said yarns B (14B1, 14B2, 14B3, 14B4) are each from 27.6 to 59.1 yarns/cm (70 to 150 yarns/inch).

**6.** The electrolyte membrane (10) according to any one of Claims 1 to 5, wherein said ion exchange groups are sulfonic acid type functional groups.

**7.** The electrolyte membrane (10) according to any one of Claims 1 to 6, wherein said fluorinated polymer contains units based on a fluorinated olefin, and units having sulfonic acid type functional groups and fluorine atoms.

**8.** The electrolyte membrane (10) according to Claim 7, wherein said fluorinated olefin is a $C_{2-3}$ fluoroolefin having at least one fluorine atom in the molecule.

**9.** The electrolyte membrane (10) according to Claim 7 or 8, wherein said units having sulfonic acid type functional groups and fluorine atoms are units represented by the formula (1).

Formula (1): $-[CF_2-CF(-L-(SO_3M)_n)]-$

L is an n+1-valent perfluorohydrocarbon group optionally containing an etheric oxygen atom, M is a hydrogen atom, an alkali metal or a quaternary ammonium cation, and n is 1 or 2.

**10.** The electrolyte membrane (10) according to any one of Claims 1 to 9, wherein said woven fabric (14) is a heat-pressed woven fabric.

**11.** The electrolyte membrane (10) according to any one of Claims 1 to 10, wherein the ion exchange capacity of said fluorinated polymer is at least 0.90 milliequivalents/gram dry resin.

**12.** An electrolysis apparatus containing an electrolyte membrane (10) as defined in any one of Claims 1 to 11.

**13.** A redox flow battery containing an electrolyte membrane (10) as defined in any one of Claims 1 to 11.

## Patentansprüche

**1.** Elektrolytmembran (10), umfassend ein fluoriertes Polymer mit Ionenaustauschgruppen sowie ein Gewebe (14), wobei

das Gewebe (14) aus Garnen A (14A1, 14A2, 14A3, 14A4), welche sich in einer Richtung erstrecken, und Garnen B (14B1, 14B2, 14B3, 14B4), welche sich in einer Richtung senkrecht zu den Garnen A (14A1, 14A2, 14A3, 14A4) erstrecken, besteht,
die Garne A (14A1, 14A2, 14A3, 14A4) und die Garne B (14B1, 14B2, 14B3, 14B4) jeweils aus einem Material, welches nicht in eine alkalische wässrige Lösung eluiert, gebildet sind,
für jeden von zehn unterschiedlichen Querschnitten, wenn entlang der Dickenrichtung der Elektrolytmembran (10) durch die Zentrumspositionen der Garne B (14B1, 14B2, 14B3, 14B4) in der Elektrolytmembran (10) geschnitten, eine Messung der Maximallänge $Y_{CA1}$ in der Dickenrichtung der Elektrolytmembran (10) der Garne A (14A1, 14A2, 14A3, 14A4) und der Maximallänge $Y_{CA2}$ in der Richtung senkrecht zu der Dickenrichtung der Elektrolytmembran (10) der Garne A (14A1, 14A2, 14A3, 14A4), in welcher die Maximallänge $Y_{CA1}$ gemessen wird, erfolgt und eine Berechnung des Aspektverhältnisses $YA_{CA2}/YA_{CA1}$ zwischen der durchschnittlichen Maximallänge $YA_{CA1}$, welche das arithmetische Mittel der erhaltenen 10 Maximallängen $Y_{CA1}$ ist, und der durchschnittlichen Maximallänge $YA_{CA2}$, welche das arithmetische Mittel der erhaltenen 10 Maximallängen $Y_{CA2}$ ist, erfolgt, und
für jeden von zehn unterschiedlichen Querschnitten, wenn entlang der Dickenrichtung der Elektrolytmembran (10) in einer Richtung parallel zu der Richtung, in welcher sich die Garne B (14B1, 14B2, 14B3, 14B4) in der Elektrolytmembran (10) erstrecken, und an einem Mittelpunkt zwischen den Garnen B (14B1, 14B2, 14B3, 14B4) geschnitten, eine Messung der Maximallänge $Y_{A1}$ in der Dickenrichtung der Elektrolytmembran (10) der Garne A (14A1, 14A2, 14A3, 14A4) und der Maximallänge $Y_{A2}$ in der Richtung senkrecht zu der Dickenrichtung der Elektrolytmembran (10) der Garne A (14A1, 14A2, 14A3, 14A4), in welcher die Maximallänge $Y_{A1}$ gemessen wird, erfolgt und eine Berechnung des Aspektverhältnisses $YA_{A2}/YA_{A1}$ zwischen der durchschnittlichen Maximallänge $YA_{A1}$, welche das arithmetische Mittel der erhaltenen 10 Maximallängen $Y_{A1}$ ist, und der durchschnittlichen Maximallänge $YA_{A2}$, welche das arithmetische Mittel der erhaltenen 10 Maximallängen $Y_{A2}$ ist, erfolgt, wodurch
das Aspektverhältnis $YA_{CA2}/YA_{CA1}$ 1 übersteigt und größer ist als das Aspektverhältnis $YA_{A2}/YA_{A1}$,
zudem, für jeden von zehn unterschiedlichen Querschnitten, wenn entlang der Dickenrichtung der Elektrolytmembran (10) durch die Zentrumspositionen der Garne A (14A1, 14A2, 14A3, 14A4) in der Elektrolytmembran (10) geschnitten, eine Messung der Maximallänge $Y_{CB1}$ in der Dickenrichtung der Elektrolytmembran (10) der Garne B (14B1, 14B2, 14B3, 14B4) und der Maximallänge $Y_{CB2}$ in der Richtung senkrecht zu der Dickenrichtung der Elektrolytmembran (10) der Garne B (14B1, 14B2, 14B3, 14B4), in welcher die Maximallänge $Y_{CB1}$ gemessen wird, erfolgt und eine Berechnung des Aspektverhältnisses $YA_{CB2}/YA_{CB1}$ zwischen der durchschnittlichen Maximallänge $YA_{CB1}$, welche das arithmetische Mittel der erhaltenen 10 Maximallängen $Y_{CB1}$ ist, und der durchschnittlichen Maximallänge $YA_{CB2}$, welche das arithmetische Mittel der erhaltenen 10 Maximallängen $Y_{CB2}$ ist, erfolgt, und
für jeden von zehn unterschiedlichen Querschnitten, wenn entlang der Dickenrichtung der Elektrolytmembran (10) in einer Richtung parallel zu der Richtung, in welcher sich die Garne A (14A1, 14A2, 14A3, 14A4) erstrecken, und an einem Mittelpunkt zwischen den Garnen A (14A1, 14A2, 14A3, 14A4) geschnitten, eine Messung der Maximallänge $Y_{B1}$ in der Dickenrichtung der Elektrolytmembran (10) der Garne B (14B1, 14B2, 14B3, 14B4) und der Maximallänge $Y_{B2}$ in der Richtung senkrecht zu der Dickenrichtung der Elektrolytmembran (10) der Garne B (14B1, 14B2, 14B3, 14B4), in welcher die Maximallänge $Y_{B1}$ gemessen wird, erfolgt und eine Berechnung des Aspektverhältnisses $YA_{B2}/YA_{B1}$ zwischen der durchschnittlichen Maximallänge $YA_{B1}$, welche das arithmetische Mittel der erhaltenen 10 Maximallängen $Y_{B1}$ ist, und der durchschnittlichen Maximallänge $YA_{B2}$, welche das arithmetische Mittel der erhaltenen 10 Maximallängen $Y_{B2}$ ist, erfolgt, wodurch
das Aspektverhältnis $YA_{CB2}/YA_{CB1}$ 1 übersteigt und größer ist als das Aspektverhältnis $YA_{B2}/YA_{B1}$, und
wobei das Aspektverhältnis $YA_{CA2}/YA_{CA1}$ und das Aspektverhältnis $YA_{CB2}/YA_{CB1}$ jeweils mindestens 1,2 betragen, und das Verhältnis des Aspektverhältnisses $YA_{CA2}/YA_{CA1}$ zu dem Aspektverhältnis $YA_{A2}/YA_{A1}$ und das Verhältnis des Aspektverhältnisses $YA_{CB2}/YA_{CB1}$ zu dem Aspektverhältnis $YA_{B2}/YA_{B1}$ jeweils mindestens 1,2 betragen.

**2.** Elektrolytmembran (10) nach Anspruch 1, wobei das Aspektverhältnis $YA_{A2}/YA_{A1}$ und das Aspektverhältnis $YA_{B2}/YA_{B1}$ jeweils von 0,8 bis 3,5 betragen.

**3.** Elektrolytmembran (10) nach Anspruch 1 oder 2, wobei die Denier-Zahl der Garne A (14A1, 14A2, 14A3, 14A4) und

die Denier-Zahl der Garne B (14B1, 14B2, 14B3, 14B4) jeweils von 15 bis 50 betragen.

**4.** Elektrolytmembran (10) nach einem der Ansprüche 1 bis 3, wobei die Garne A (14A1, 14A2, 14A3, 14A4) und die Garne B (14B1, 14B2, 14B3, 14B4) jeweils unabhängig aus einem Material, ausgewählt aus der Gruppe, bestehend aus Polytetrafluorethylen, einem Tetrafluorethylen-Perfluoralkylvinylether-Copolymer, Polyetheretherketon und Polyphenylensulfid, zusammengesetzt sind.

**5.** Elektrolytmembran (10) nach einem der Ansprüche 1 bis 4, wobei die Dichten der Garne A (14A1, 14A2, 14A3, 14A4) und der Garne B (14B1, 14B2, 14B3, 14B4) jeweils von 27,6 bis 59,1 Garne/cm (70 bis 150 Garne/Zoll) betragen.

**6.** Elektrolytmembran (10) nach einem der Ansprüche 1 bis 5, wobei die Ionenaustauschgruppen funktionelle Gruppen des Sulfonsäuretyps sind.

**7.** Elektrolytmembran (10) nach einem der Ansprüche 1 bis 6, wobei das fluorierte Polymer Einheiten auf Basis eines fluorierten Olefins sowie Einheiten mit funktionellen Gruppen des Sulfonsäuretyps und Fluoratomen enthält.

**8.** Elektrolytmembran (10) nach Anspruch 7, wobei das fluorierte Olefin ein $C_{2-3}$-Fluorolefin mit mindestens einem Fluoratom im Molekül ist.

**9.** Elektrolytmembran (10) nach Anspruch 7 oder 8, wobei die Einheiten mit funktionellen Gruppen des Sulfonsäuretyps und Fluoratomen Einheiten, dargestellt durch die Formel (1), sind.

Formel (1): $-[CF_2-CF(-L-(SO_3M)_n)]-$

L ist eine n+1-wertige Perfluorkohlenwasserstoffgruppe, welche gegebenenfalls ein etherisches Sauerstoffatom enthält, M ist ein Wasserstoffatom, ein Alkalimetall oder ein quartäres Ammoniumkation, und n ist 1 oder 2.

**10.** Elektrolytmembran (10) nach einem der Ansprüche 1 bis 9, wobei das Gewebe (14) ein heißgepresstes Gewebe ist.

**11.** Elektrolytmembran (10) nach einem der Ansprüche 1 bis 10, wobei die Ionenaustauschkapazität des fluorierten Polymers mindestens 0,90 Milliäquivalente/Gramm Harz im trockenen Zustand beträgt.

**12.** Elektrolysevorrichtung, enthaltend eine Elektrolytmembran (10) nach einem der Ansprüche 1 bis 11.

**13.** Redox-Durchflussbatterie, enthaltend eine Elektrolytmembran (10) nach einem der Ansprüche 1 bis 11.

## Revendications

**1.** Membrane d'électrolyte (10) comprenant un polymère fluoré ayant des groupes d'échange d'ions et un tissu tissé (14), dans laquelle

ledit tissu tissé (14) est constitué de fils A (14A1, 14A2, 14A3, 14A4) s'étendant dans une direction et de fils B (14B1, 14B2, 14B3, 14B4) s'étendant dans une direction orthogonale auxdits fils A (14A1, 14A2, 14A3, 14A4), lesdits fils A (14A1, 14A2, 14A3, 14A4) et lesdits fils B (14B1, 14B2, 14B3, 14B4) sont chacun réalisés en un matériau qui ne subit pas d'élution dans une solution aqueuse alcaline,
pour chacune de dix sections transversales différentes lors de la découpe le long de la direction d'épaisseur de ladite membrane d'électrolyte (10) à travers les positions centrales desdits fils B (14B1, 14B2, 14B3, 14B4) dans ladite membrane d'électrolyte (10), mesurer la longueur maximale $Y_{CA1}$ dans la direction d'épaisseur de ladite membrane d'électrolyte (10) desdits fils A (14A1, 14A2, 14A3, 14A4) et la longueur maximale $Y_{CA2}$ dans la direction orthogonale à la direction d'épaisseur de ladite membrane d'électrolyte (10) desdits fils A (14A1, 14A2, 14A3, 14A4), dans laquelle ladite longueur maximale $Y_{CA1}$ est mesurée, et calculer le rapport de longueur la $YA_{CA2}/YA_{CA1}$ entre la longueur maximale moyenne $YA_{CA1}$ qui est la moyenne arithmétique des 10 longueurs maximales obtenues $Y_{CA1}$ et la longueur maximale moyenne $YA_{CA2}$ qui est la moyenne arithmétique des 10 longueurs maximales obtenues $Y_{CA2}$, et
pour chacune de dix sections transversales différentes lors de la découpe le long de la direction d'épaisseur de ladite membrane d'électrolyte (10) dans une direction parallèle à la direction dans laquelle lesdits fils B (14B1, 14B2, 14B3, 14B4) s'étendent dans ladite membrane d'électrolyte (10) et à un point médian entre lesdits fils B

(14B1, 14B2, 14B3, 14B4), mesurer la longueur maximale $Y_{A1}$ dans la direction d'épaisseur de ladite membrane d'électrolyte (10) desdits fils A (14A1, 14A2, 14A3, 14A4) et la longueur maximale $Y_{A2}$ dans la direction orthogonale à la direction d'épaisseur de ladite membrane d'électrolyte (10) desdits fils A (14A1, 14A2, 14A3, 14A4), dans laquelle ladite longueur maximale $Y_{A1}$ est mesurée, et calculer le rapport de longueur $YA_{A2}/YA_{A1}$ entre la longueur maximale moyenne $YA_{A1}$ qui est la moyenne arithmétique des 10 longueurs maximales obtenues $Y_{A1}$ et la longueur maximale moyenne $YA_{A2}$ qui est la moyenne arithmétique des 10 longueurs maximales obtenues $Y_{A2}$, moyennant quoi

ledit rapport de longueur $YA_{CA2}/YA_{CA1}$ dépasse 1 et est supérieur audit rapport de longueur $YA_{A2}/YA_{A1}$,

en outre, pour chacune de dix sections transversales différentes lors de la découpe le long de la direction d'épaisseur de ladite membrane d'électrolyte (10) à travers les positions centrales desdits fils A (14A1, 14A2, 14A3, 14A4) dans ladite membrane d'électrolyte (10), mesurer la longueur maximale $Y_{CB1}$ dans la direction d'épaisseur de ladite membrane d'électrolyte (10) desdits fils B (14B1, 14B2, 14B3, 14B4) et la longueur maximale $Y_{CB2}$ dans la direction orthogonale à la direction d'épaisseur de ladite membrane d'électrolyte (10) desdits fils B (14B1, 14B2, 14B3, 14B4), dans laquelle ladite longueur maximale $Y_{CB1}$ est mesurée, et calculer le rapport de longueur la $YA_{CB2}/YA_{CB1}$ entre la longueur maximale moyenne $YA_{CB1}$ qui est la moyenne arithmétique des 10 longueurs maximales obtenues $Y_{CB1}$ et la longueur maximale moyenne $YA_{CB2}$ qui est la moyenne arithmétique des 10 longueurs maximales obtenues $Y_{CB2}$, et

pour chacune de dix sections transversales différentes lors de la découpe le long de la direction d'épaisseur de ladite membrane d'électrolyte (10) dans une direction parallèle à la direction dans laquelle lesdits fils A (14A1, 14A2, 14A3, 14A4) s'étendent et à un point médian entre lesdits fils A (14A1, 14A2, 14A3, 14A4), mesurer la longueur maximale $Y_{B1}$ dans la direction d'épaisseur de ladite membrane d'électrolyte (10) desdits fils B (14B1, 14B2, 14B3, 14B4) et la longueur maximale $Y_{B2}$ dans la direction orthogonale à la direction d'épaisseur de ladite membrane d'électrolyte (10) desdits fils B (14B1, 14B2, 14B3, 14B4), dans laquelle ladite longueur maximale $Y_{B1}$ est mesurée, et calculer le rapport de longueur $YA_{B2}/YA_{B1}$ entre la longueur maximale moyenne $YA_{B1}$ qui est la moyenne arithmétique des 10 longueurs maximales obtenues $Y_{B1}$ et la longueur maximale moyenne $YA_{B2}$ qui est la moyenne arithmétique des 10 longueurs maximales obtenues $Y_{B2}$, moyennant quoi

ledit rapport de longueur $YA_{CB2}/YA_{CB1}$ dépasse 1 et est supérieur audit rapport de longueur $YA_{B2}/YA_{B1}$, et

dans laquelle ledit rapport de longueur $YA_{CA2}/YA_{CA1}$ et ledit rapport de longueur $YA_{CB2}/YA_{CB1}$ sont chacun d'au moins 1,2, et le rapport dudit rapport de longueur $YA_{CA2}/YA_{CA1}$ sur ledit rapport de longueur $YA_{A2}/YA_{A1}$ et le rapport dudit rapport de longueur $YA_{CB2}/YA_{CB1}$ sur ledit rapport de longueur $YA_{B2}/YA_{B1}$ sont chacun d'au moins 1,2.

2. Membrane d'électrolyte (10) selon la revendication 1, dans laquelle ledit rapport de longueur $YA_{A2}/YA_{A1}$ et ledit rapport de longueur $YA_{B2}/YA_{B1}$ sont chacun de 0,8 à 3,5.

3. Membrane d'électrolyte (10) selon la revendication 1 ou 2, dans laquelle le numéro de fil desdits fils A (14A1, 14A2, 14A3, 14A4) et le numéro de fil desdits fils B (14B1, 14B2, 14B3, 14B4) sont chacun de 15 à 50.

4. Membrane d'électrolyte (10) selon l'une quelconque des revendications 1 à 3, dans laquelle lesdits fils A (14A1, 14A2, 14A3, 14A4) et lesdits fils B (14B1, 14B2, 14B3, 14B4) sont chacun indépendamment composés d'un matériau sélectionné parmi le groupe constitué du polytétrafluoroéthylène, d'un copolymère de tétrafluoroéthylène-éther perfluoroalkylvinylique, de la polyéther éther cétone et du sulfure de polyphénylène.

5. Membrane d'électrolyte (10) selon l'une quelconque des revendications 1 à 4, dans laquelle les densités desdits fils A (14A1, 14A2, 14A3, 14A4) et desdits fils B (14B1, 14B2, 14B3, 14B4) sont chacune de 27,6 à 59,1 fils/cm (70 à 150 fils/pouce).

6. Membrane d'électrolyte (10) selon l'une quelconque des revendications 1 à 5, dans laquelle lesdits groupes d'échange d'ions sont des groupes fonctionnels de type acide sulfonique.

7. Membrane d'électrolyte (10) selon l'une quelconque des revendications 1 à 6, dans laquelle ledit polymère fluoré contient des unités basées sur une oléfine fluorée et des unités ayant des groupes fonctionnels de type acide sulfonique et des atomes de fluor.

8. Membrane d'électrolyte (10) selon la revendication 7, dans laquelle ladite oléfine fluorée est une fluorooléfine en $C_{2-3}$ ayant au moins un atome de fluor dans la molécule.

9. Membrane d'électrolyte (10) selon la revendication 7 ou 8, dans laquelle lesdites unités ayant des groupes

fonctionnels de type acide sulfonique et des atomes de fluor sont des unités représentées par la formule (1).

Formule (1) : $-[CF_2-CF(-L-SO_3M)_n)]-$

L est un groupe perfluorohydrocarbure n+1-valent contenant en option un atome d'oxygène éthérique, M est un atome d'hydrogène, un métal alcalin ou un cation d'ammonium quaternaire, et n est 1 ou 2.

**10.** Membrane d'électrolyte (10) selon l'une quelconque des revendications 1 à 9, dans laquelle ledit tissu tissé (14) est un tissu tissé pressé à chaud.

**11.** Membrane d'électrolyte (10) selon l'une quelconque des revendications 1 à 10, dans laquelle la capacité d'échange d'ions dudit polymère fluoré est d'au moins 0,90 milliéquivalent/gramme de résine sèche.

**12.** Appareil d'électrolyse contenant une membrane d'électrolyte (10) selon l'une quelconque des revendications 1 à 11.

**13.** Pile rédox contenant une membrane d'électrolyte (10) selon l'une quelconque des revendications 1 à 11.

Fig. 1

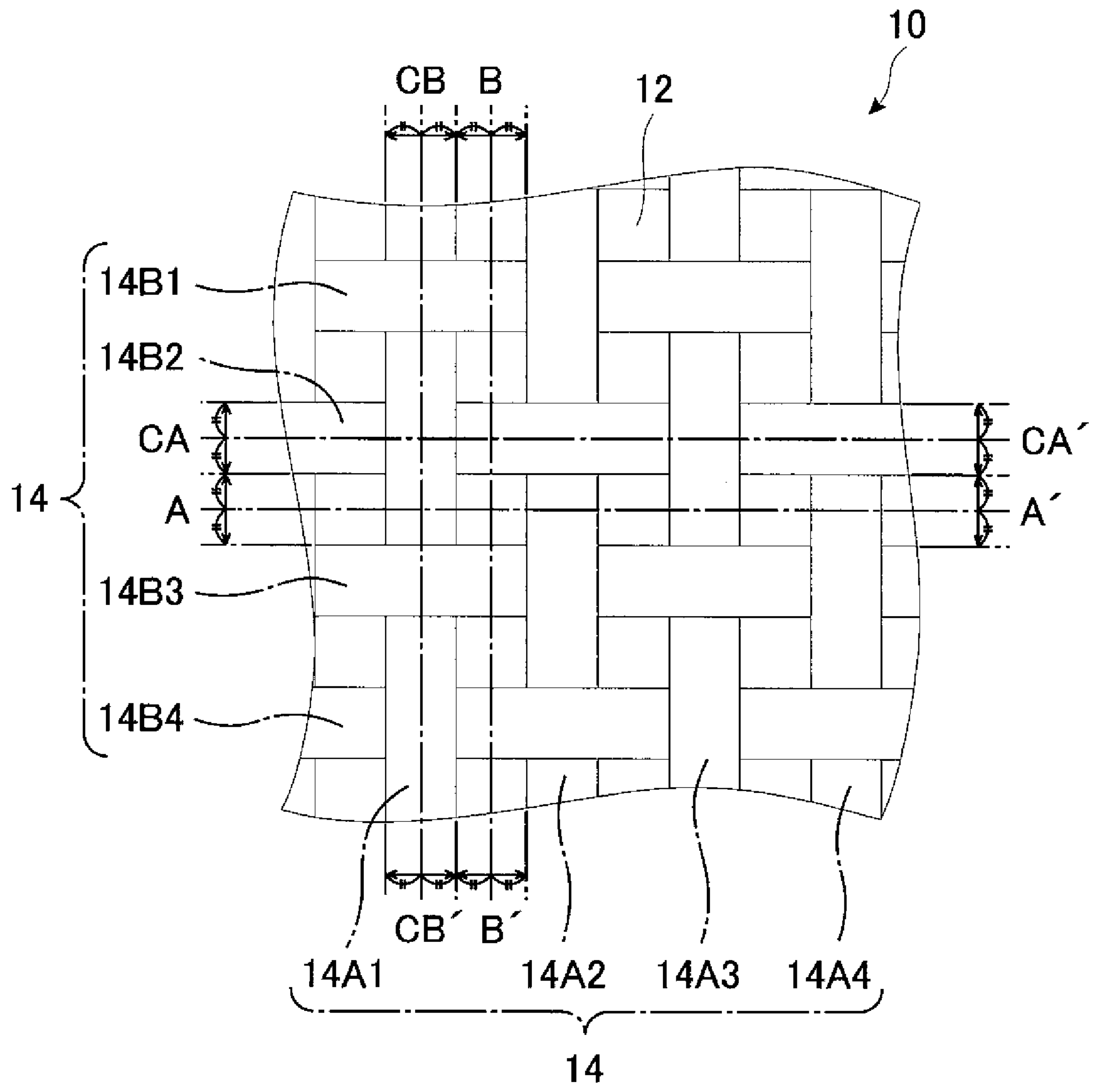
10
12
CB
B
14B1
14B2
CA
A
CA´
A´
14
14B3
14B4
CB´
B´
14A1
14A2
14A3
14A4
14

Fig. 2

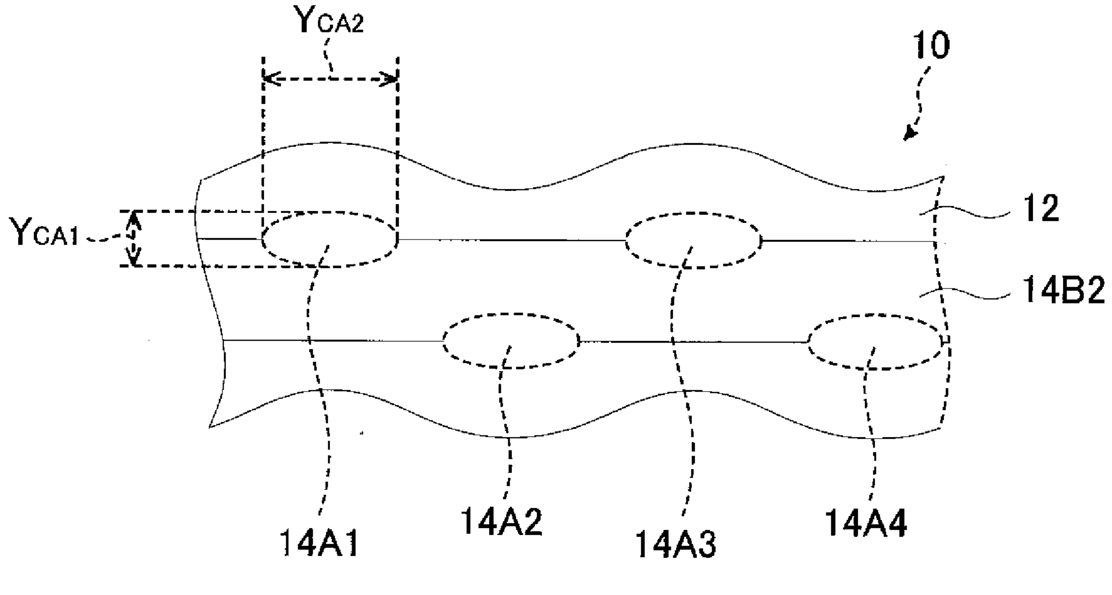
YCA2
10
YCA1
12
14B2
14A1
14A2
14A3
14A4

Fig. 3

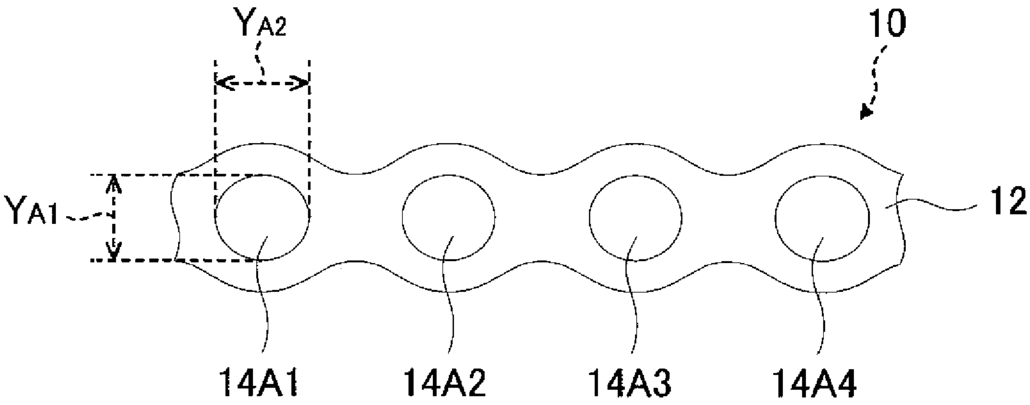


Fig. 4

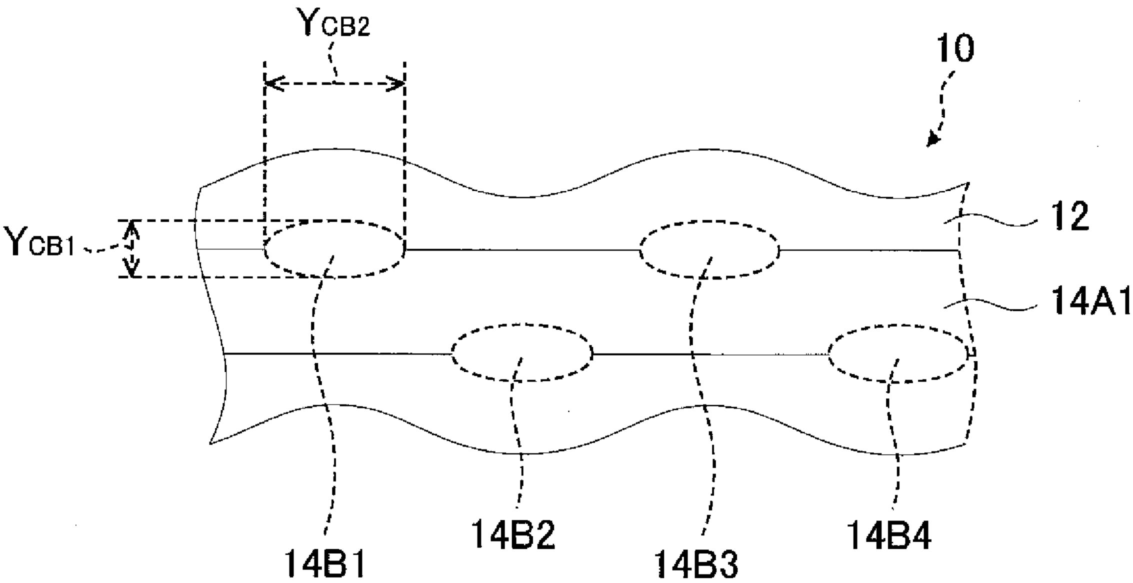


Fig. 5

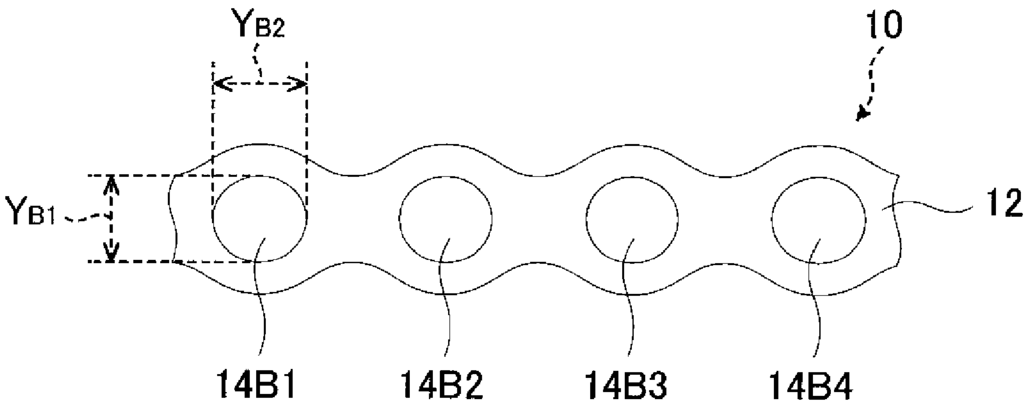

Fig. 6

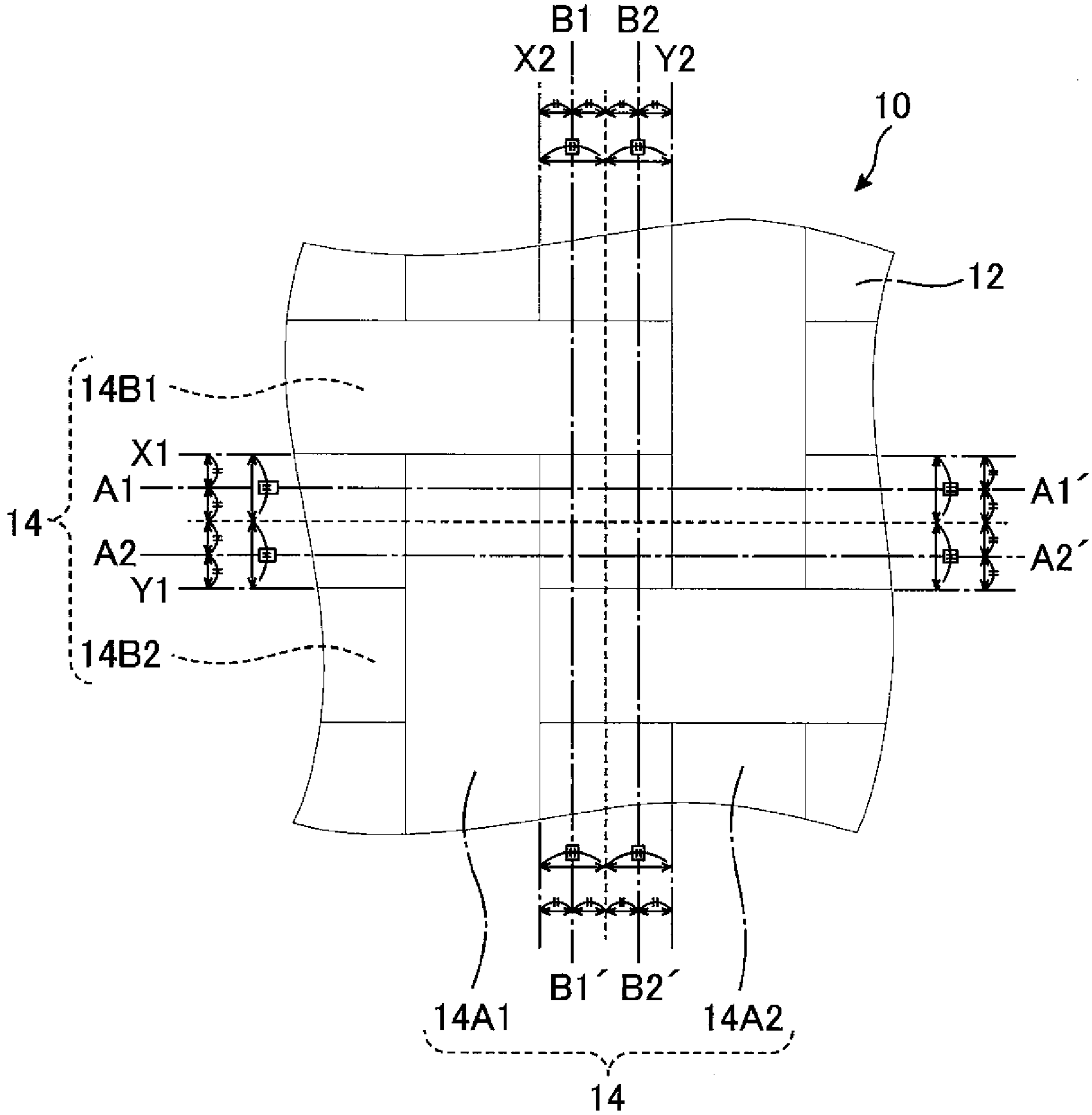
B1
B2
X2
Y2
10
12
14B1
X1
A1
14
A2
Y1
14B2
A1´
A2´
B1´
B2´
14A1
14A2
14

Fig. 7

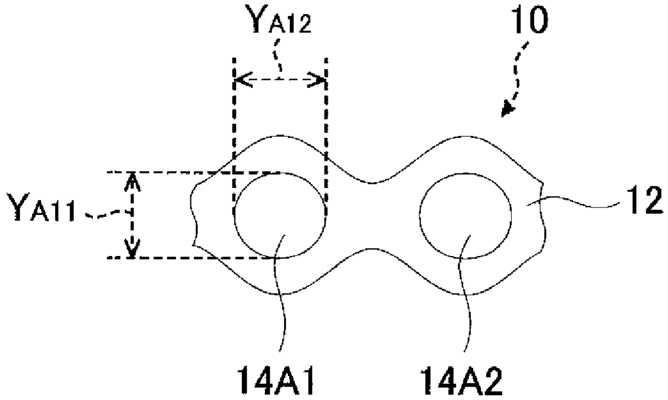
$Y_{A12}$
10
$Y_{A11}$
12
14A1
14A2

Fig. 8

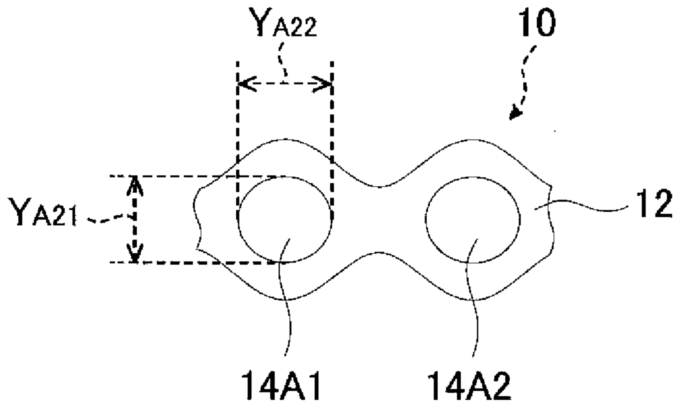


Fig. 9

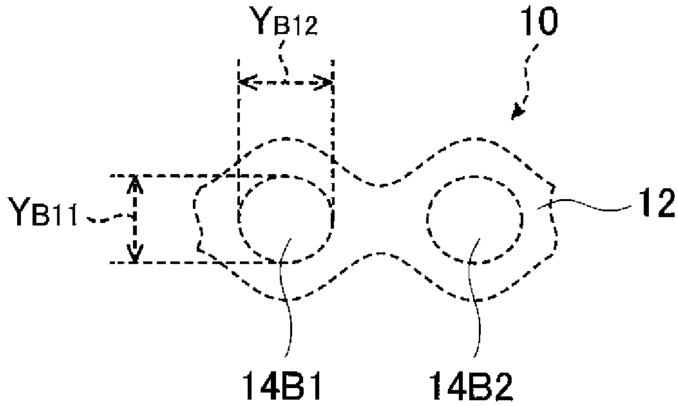


Fig. 10

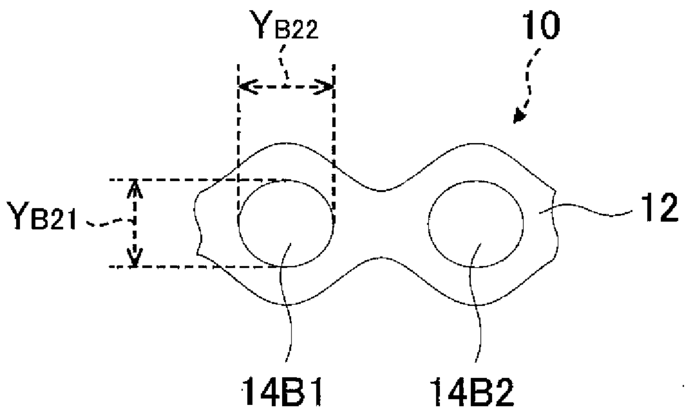

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020162511 A1
- US 2020259196 A1
- WO 2019240278 A1
- EP 3527697 A1